# EUROPEAN PATENT APPLICATION

(11) **EP 4 657 074 A1**
(43) Date of publication of application: **03.12.2025**
(21) Application number: 25179024.2
(22) Date of filing: 27.05.2025
(51) Int. Cl.: G01N 35/04, G01N 35/00

(54) **ANALYSIS SYSTEM**

(30) Priority: 29.05.2024 JP 2024087073; 29.05.2024 JP 2024087067
(71) Applicant: SYSMEX CORPORATION, Kobe-shi Hyogo 651-0073 (JP)
(72) Inventor: NAGAI, Takaaki, Kobe-shi, Hyogo, 651-0073 (JP); ARIYOSHI, Shunsuke, Kobe-shi, Hyogo, 651-0073 (JP); ODA, Kohei, Kobe-shi, Hyogo, 651-0073 (JP)
(74) Representative: Hoffmann Eitle

(57) **Abstract**

Disclosed is an analysis system (1) comprising: a blood cell analyzer (2) configured to measure at least CBC items including white blood cell count, red blood cell count, hemoglobin amount, hematocrit value, mean corpuscular volume, mean corpuscular hemoglobin, mean corpuscular hemoglobin concentration, and platelet count; a blood coagulation analyzer (3) ; and a transporter (4) configured to transport a sample to a first acquisition position on which the sample is acquired by the blood cell analyzer (2) and a second acquisition position on which the sample is acquired by the blood coagulation analyzer (3), the transporter (4) having a first side and a second side opposite to the first side, wherein the blood cell analyzer (2) and the blood coagulation analyzer (3) are arranged along the first side of the transporter, and the blood cell analyzer (2), the blood coagulation analyzer (3), and the transporter (4) are arranged in positions and orientations that allow accesses from the second side of the transporter (4).

## Description

### CROSS REFERENCE TO RELATED APPLICATIONS

This application claims priority from prior Japanese Patent Applications No. 2024-087067, filed on May 29, 2024, entitled "COMPOSITE ANALYSIS SYSTEM, and No. 2024-087073, filed on May 29, 2024, entitled "COMPOSITE ANALYSIS SYSTEM, the entire content of which is incorporated herein by reference.

### FIELD OF THE INVENTION

The present disclosure relates to an analysis system, and more particularly, to an analysis system including a blood cell analyzer and a blood coagulation analyzer.

### BACKGROUND OF THE INVENTION

Conventionally, an analysis system including a blood cell analyzer and a blood coagulation analyzer is known. For example, Japanese Patent Publication 2000-19180 discloses an analysis system including an analyzer block including a blood analyzer line, a coagulation analyzer line, and the like, a pre-processing block configured to perform a process common for the analyzer blocks, and an unmanned transport car provided between the pre-processing block and the analyzer block to transport samples therebetween. In Japanese Patent Publication 2000-19180, sample transport paths of each analyzer line are arranged to be parallel to each other, and each analyzer line is arranged to be aligned in the front-rear direction so that the unmanned transport car can easily move between the pre-processing block and each analyzer line.

Although the analysis system of Japanese Patent Publication 2000-19180 may be useful in a large-scale facility, there is no larger sample volume than that of the large-scale facility in a medium-scale facility or below, and an unmanned transport car may become excessive equipment. In particular, it is not easy to operate such a system effectively in the medium-scale or smaller facility.

Although it is conceivable to connect the respective analyzer lines with a transport path for effective operation of the analysis system, in the system of Japanese Patent Publication 2000-19180, since the respective analyzer lines are arranged side by side in the front-rear direction, it takes time and effort to move between the respective analyzer lines when performing operations such as operation on the respective analyzer lines and replacement of consumables, resulting in a decrease in work-efficiency.

### SUMMARY OF THE INVENTION

The scope of the present invention is defined solely by the appended claims, and is not affected to any degree by the statements within this summary.

The present disclosure relates to an analysis system (1) comprising: a blood cell analyzer (2) configured to measure at least CBC items including white blood cell count, red blood cell count, hemoglobin amount, hematocrit value, mean corpuscular volume, mean corpuscular hemoglobin, mean corpuscular hemoglobin concentration, and platelet count; a blood coagulation analyzer (3) ; and a transporter (4) configured to transport a sample to a first acquisition position on which the sample is acquired by the blood cell analyzer (2) and a second acquisition position on which the sample is acquired by the blood coagulation analyzer (3), the transporter (4) having a first side and a second side opposite to the first side, wherein the blood cell analyzer (2) and the blood coagulation analyzer (3) are arranged along the first side of the transporter, and the blood cell analyzer (2), the blood coagulation analyzer (3), and the transporter (4) are arranged in positions and orientations that allow at least one of the following accesses from the second side of the transporter (4) : (a) access to a power operation receiver configured to receive a power operation for the blood cell analyzer (2) and a power operation for the blood coagulation analyzer (3), (b) access to a consumable set object on which a consumable used in the blood cell analyzer (2) and a consumable used in the blood coagulation analyzer (3) are set, (c) access to a terminal device configured to receive an operation instruction and/or display information for the blood cell analyzer (2) and receive an operation instruction and/or display information for the blood coagulation analyzer (3), (d) access to a maintenance management target on which a first maintenance on the blood cell analyzer (2) and a second maintenance on the blood coagulation analyzer (3) are performed.

According to the analysis system of the present disclosure, since it is possible to operate and work on the analyzers from the second side of the transporter, it is possible to avoid inefficient movement such as moving around a perimeter of the system as in the prior art. Accordingly, a moving distance of the operator can be shortened, and a workload of the operator can be reduced. The operator can smoothly perform operations such as, for example, operations on the respective analyzers, reagent replenishment/replacement, consumable replenishment/replacement, error-handling, and maintenance to maintenance management target.

### BRIEF DESCRIPTION OF THE DRAWINGS

FIG. 1 is a diagram illustrating an external view of an analysis system according to an exemplary embodiment.
FIG. 2 is a diagram illustrating a configuration of an analysis system according to the exemplary embodiment;
FIG. 3 is a diagram illustrating a configuration of a blood cell analyzer;
FIG. 4 is a diagram illustrating an upper portion of the blood cell analyzer with the cover opened.
FIG. 5 is a diagram illustrating an upper portion of the blood cell analyzer and illustrating a state in which a quality control substance is manually measured.
FIG. 6 is a diagram illustrating a lower portion of the blood cell analyzer with the door opened.
FIG. 7 is a diagram illustrating an exemplary operation screen of the blood cell analyzer;
FIG. 8 is a diagram illustrating an example of an analysis result screen for the blood cell analyzer;
FIG. 9 is a diagram illustrating a configuration of a blood coagulation analyzer;
FIG. 10 is a diagram illustrating an upper portion of the blood coagulation analyzer with the cover opened;
FIG. 11 is a diagram illustrating a lower portion of the blood coagulation analyzer with the door opened.
FIG. 12 is a diagram illustrating an exemplary operation screen of the blood coagulation analyzer;
FIG. 13 is a diagram illustrating an example of a analysis result screen for the blood coagulation analyzer;
FIG. 14 is a diagram illustrating a first modification of the analysis system.
FIG. 15 is a diagram illustrating a second modification of the analysis system.
FIG. 16 is a diagram illustrating a third modification of the analysis system.
FIG. 17 is a diagram illustrating a fourth modification of the analysis system.

### DETAILED DESCRIPTION

Hereinafter, embodiments of analysis systems according to the present disclosure will be described in detail referring to the drawings. The embodiments described below are merely examples, and the present invention is not limited to the following embodiments. Further, the present invention includes forms in which each constituent element of a plurality of embodiments and modified examples described below is selectively combined.

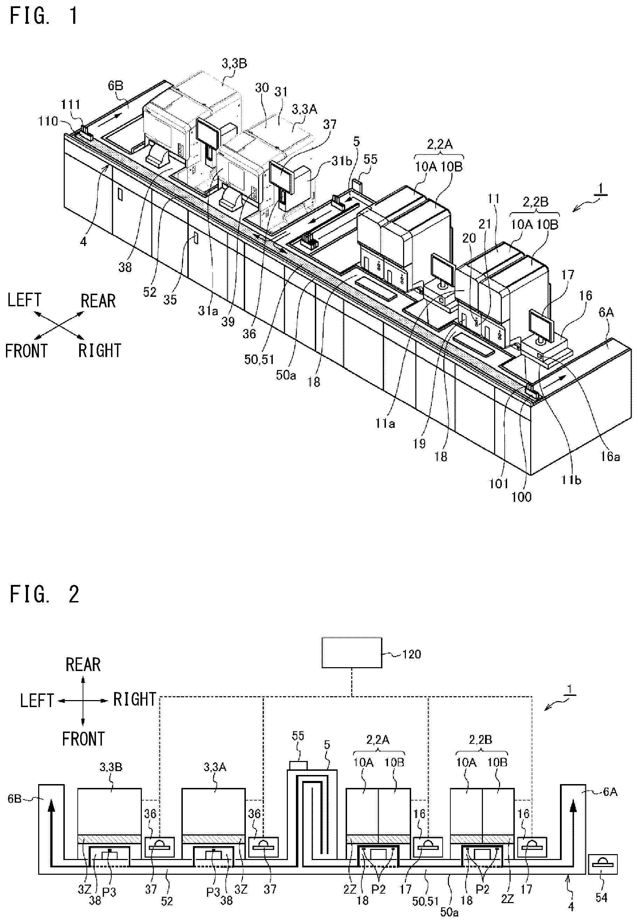

FIG. 1 is a perspective view illustrating an exterior of an analysis system 1 according to an exemplary embodiment. FIG. 2 is a diagram illustrating a configuration of the analysis system 1. As illustrated in FIG. 1 and FIG. 2, the analysis system 1 includes a blood cell analyzer 2, a blood coagulation analyzer 3, and a transporter 4. The blood cell analyzer 2 is an analyzer configured to count blood cells in a blood sample, and the blood coagulation analyzer 3 is an analyzer configured to measure hemostatic components in a blood sample. The transporter 4 further includes a continuous transport path 50 configured to transport samples to a sample acquisition position P2 for the blood cell analyzer 2 and a sample acquisition position P3 for the blood coagulation analyzer 3, a sample installation unit on which the samples are set, and a sample collection unit on which the measured samples are collected. The transporter 4 has a first side and a second side opposite to the first side. In this embodiment, the first side is front side of the transporter 4 and the second side is the rear side of the transporter 4. The blood cell analyzer 2 and the blood coagulation analyzer 3 are arranged along the first side of the transporter 4. Note that the continuous transport path 50 may not be constituted by a single transport path, and may be a transport path in which a plurality of transport paths are connected. However, no other transport device for lifting and transporting sample containers or racks is required for transporting the sample containers or racks at an injunction of adjacent transport paths.

In the analysis system 1, a rack 100,110 holding each sample container 101,111 containing a sample is used, and the rack 100,110 is transported to the blood cell analyzer 2 or blood coagulation analyzer 3 by the transporter 4. The analysis system 1 includes a rack installation part (object) 5 on which the rack 100,110 is set and a rack collection part (object) 6A,6B configured to collect each of the racks 100,110. In the present embodiment, the rack installation part 5 functions as the above-described sample installation unit, and the rack collection part 6A,6B functions as the sample collection unit.

The rack 100 is a rack configured to hold the sample containers 101 and is transported to the blood cell analyzer 2, and is collected in the rack collection part 6A after the measurement of the sample is completed. The rack 110 is a rack configured to hold the sample containers 111 and is transported to the blood coagulation analyzer 3, and is collected in the rack collection part 6B after the measurement of the sample is completed. That is, the racks 100,110 are placed in the same rack installation part 5 and collected in different rack collection parts 6A,6B. The racks 100,110 may have, for example, the same shape and size, but may have different shapes and sizes as long as they can be installed in rack installation part 5 and transported by transporter 4.

The sample container 101 held by the rack 100 and transported to the blood cell analyzer 2 and the sample container 111 held by the rack 110 and transported to the blood coagulation analyzer 3 generally contain different types of samples. Since the samples contained in the sample container 101,111 are prepared by different methods, they are different even if a subject is the same. For example, the sample contained in the sample container 101 is whole blood, and the sample contained in the sample container 111 is blood plasma. In the present embodiment, the rack installation part 5 is connected to transport path 50 between the blood cell analyzer 2 and the blood coagulation analyzer 3. Then, the racks 100,110 are transported from the rack installation part 5 to the respective analyzers. Therefore, in the present embodiment, it is not possible to set two types of sample containers 101,111 in the same rack.

The rack 100 includes a plurality of holding portions capable of holding the sample containers 101 one by one, and holds a plurality of (e.g., 5, 6, or 10) sample containers 101 in a single row. Similarly, the rack 110 holds a plurality of sample containers 111 in a row. In the present embodiment, a number of sample containers that can be held by the rack 100 and a number of sample containers that can be held by the rack 110 are the same, but they may be different from each other. As described above, although only the sample container 101 is held in the rack 100 and only the sample container 111 is held in the rack 110, the analysis system 1 may include a rearrangement device capable of transferring a sample container to another rack. In this case, since the rearrangement device prepares the rack 100 in which only the sample container 101 is held and the rack 110 in which only the sample container 111 is held, the operator can set the two types of sample containers 101,111 in the same rack.

The analysis system 1 is configured by arranging the blood cell analyzer 2, the blood coagulation analyzer 3, the rack installation part 5 and the rack collection parts 6A,6B in a row and connecting the respective analyzers/devices by the transport path 50 of the transporter 4. In the following, for convenience of explanation, terms indicating a front-rear direction, a left-right direction, and a top-bottom direction are used. The front-rear direction is perpendicular to the left-right direction in a plan view. A main transport path of the transport path 50 extends in the left-right direction. The left and right sides of the analysis system 1 refer to the left and right sides when the system is viewed from a standing position of the operator. In the present embodiment, the blood cell analyzer 2 and the rack collection part 6A are arranged on the right side of the rack installation part 5, and the blood coagulation analyzer 3 and the rack collection part 6B are arranged on the left side of the rack installation part 5.

In the present specification, a standing position of the operator is, for example, a place where the operator stands to perform operations such as operations on the respective analyzers/devices, reagent replenishment/replacement, consumable replenishment/replacement, error-handling, and maintenance to maintenance management target. The analysis system 1 is often placed in a clinical laboratory such that the front of the system, which is the standing position of the operator, is more open than the rear of the system. The analysis system 1 is arranged, for example, such that the rear of the system is along a side wall of the clinical laboratory or a rear of another analysis system.

The analysis system 1 includes two blood cell analyzers 2A,2B and two blood coagulation analyzers 3A,3B. Since the blood cell analyzers 2A,2B include two measurement units 10A and 10B, respectively, it can be said that the analysis system 1 includes four blood cell analyzers. The blood cell analyzers 2A,2B respectively include a transport unit 18 shared by the measurement units 10A and 10B, and is configured to perform measurements of samples by the measurement units 10A and 10B. A number of blood cell analyzer 2 and blood coagulation analyzer 3 is not particularly limited, and may be, for example, one or three or more. The number of blood cell analyzer 2 and blood coagulation analyzer 3 may be the same or different.

The analysis system 1 further includes a power operation receiver configured to receive a power operation for the blood cell analyzer 2 and a power operation for the blood coagulation analyzer 3, a consumable set object on which consumables used in the respective analyzers are set, and a maintenance management target on which maintenance on the respective analyzers are performed. The power operation receiver may be a common power operation receiver configured to receive a power operation for both the blood cell analyzer 2 and the blood coagulation analyzer 3, or may include a first power operation receiver configured to receive a power operation for the blood cell analyzer 2 and a second power operation receiver configured to receive a power operation for the blood coagulation analyzer 3. The power operation receiver may include at least one of a startup instruction receiver and a shutdown instruction receiver described later. The startup instruction receiver may be a common startup instruction receiver configured to receive a startup instruction for both the blood cell analyzer 2 and the blood coagulation analyzer 3, or may include a first startup instruction receiver configured to receive a startup instruction for the blood cell analyzer 2 and a second startup instruction receiver configured to receive a startup instruction for the blood coagulation analyzer 3. The shutdown instruction receiver may be a common shutdown instruction receiver configured to receive a shutdown instruction for both the blood cell analyzer 2 and the blood coagulation analyzer 3, or may include a first shutdown instruction receiver configured to receive a shutdown instruction for the blood cell analyzer 2 and a second shutdown instruction receiver configured to receive a shutdown instruction for the blood coagulation analyzer 3. The consumable set object may include at least one of quality control substance set object, reagent set object, and cleaning liquid set object, which will be described later. The consumable set object may be a common consumable set object on which a first consumable used by the blood cell analyzer 2 and a second consumable used by the blood coagulation analyzer 3 are set, or may comprise a first consumable set object on which the first consumable used by the blood cell analyzer 2 is set and a second consumable set object on which the second consumable used by the blood coagulation analyzer 3 is set. The reagent set object may be a common reagent set object on which a first reagent used by the blood cell analyzer 2 and a second reagent used by the blood coagulation analyzer 3 are set, or may comprise a first reagent set object on which the first reagent used by the blood cell analyzer 2 is set and a second reagent set object on which the second reagent used by the blood coagulation analyzer 3 is set. The cleaning liquid set object may be a common cleaning liquid set object on which a first cleaning liquid used by the blood cell analyzer 2 and a second cleaning liquid used by the blood coagulation analyzer 3 are set, or may include a first cleaning liquid set object on which the first cleaning liquid used by the blood cell analyzer 2 is set and a second cleaning liquid set object on which the second cleaning liquid used by the blood coagulation analyzer 3 is set. The maintenance management target may include at least one of aspiration tube, error handling object, and maintenance target, which will be described later. The maintenance management target may be a common maintenance management target on which maintenance on both the blood cell analyzer 2 and the blood coagulation analyzer 3 is performed, or may include a first maintenance management target on which first maintenance for the blood cell analyzer 2 is performed and a second maintenance management target on which second maintenance for the blood coagulation analyzer 3 is performed. The error handling object may be a common error handling object on which errors occurred in the blood cell analyzer 2 and the blood coagulation analyzer 3 are handled, or may include a first error handling object on which a first error occurred in the blood cell analyzer 2 is handled and a second error handling object on which a second error occurred in the blood coagulation analyzer 3 is handled. The maintenance target may be a common maintenance target on which maintenances on the blood cell analyzer 2 and the blood coagulation analyzer 3 are performed, or may include a first maintenance target on which a first maintenance on the blood cell analyzer 2 is performed and a second maintenance target on which a second maintenance on the blood coagulation analyzer 3 is performed. The analysis system 1 also includes a terminal device having functions of receiving operation instructions for the blood cell analyzer 2 and the blood coagulation analyzer 3, displaying analysis results, or both. The terminal device may be a terminal device that is common to the blood cell analyzer 2 and the blood coagulation analyzer 3, or may comprise a first terminal device for the blood cell analyzer 2 and a second terminal device for the blood coagulation analyzer 3. In the following, the term "measurement result" is also used, but the analysis result and the measurement result are synonymous with each other.

As described above, the blood cell analyzer 2 and the blood coagulation analyzer 3 are arranged side by side in the left-right direction, and the transport path 50 of the transporter 4 extends straight in the left-right direction. The blood cell analyzer 2 and the blood coagulation analyzer 3 are arranged along the first side of the transporter 4. In the present embodiment, one side along the transport path 50 of the transporter 4 is the first side, the other side along the transport path 50 is the second side. The first side of the transport path 50 can be said to be the rear side of the transport path 50, and the second side of the transport path 50 can be said to be the front side of the transport path 50. Some components of the blood cell analyzer 2 and blood coagulation analyzer 3 may be arranged directly below the transport path 50 but not on the second side of the transport path 50. The standing position of the operator is in the second side (front side) of the transporter 4 and a position closest to a front edge of the transporter 4. As will be described in detail later, the blood cell analyzer 2, the blood coagulation analyzer 3, and the transporter 4 may be arranged in positions and orientations that allow at least one of the following accesses from the second side (front side) of the transport path 50:
(a) access to a power operation receiver for the blood cell analyzer 2 and the blood coagulation analyzer 3,
(b) access to a consumable set object for the blood cell analyzer 2 and the blood coagulation analyzer 3,
(c) access to a terminal device for the blood cell analyzer 2 and the blood coagulation analyzer 3,
(d) access to a maintenance management target for the blood cell analyzer 2 and the blood coagulation analyzer 3.

The blood cell analyzer 2, the blood coagulation analyzer 3, and the transporter 4 may be arranged in positions and orientations that allow at least one of the following accesses from at least one position along one side (front side) of the transport path 50:
(a) access to a power operation receiver for the blood cell analyzer 2 and the blood coagulation analyzer 3,
(b) access to a consumable set object for the blood cell analyzer 2 and the blood coagulation analyzer 3,
(c) access to a terminal device for the blood cell analyzer 2 and the blood coagulation analyzer 3,
(d) access to a maintenance management target for the blood cell analyzer 2 and the blood coagulation analyzer 3.

The at least one position along one side (front side) of the transport path 50 may be a position in front of the blood cell analyzer 2, a position in front of the blood coagulation analyzer 3, a position in front of the blood cell analyzer 2 and a position in front of the blood coagulation analyzer 3, a position in front of the terminal device for the blood cell analyzer 2 and the blood coagulation analyzer 3, a position in front of a first terminal device for the blood cell analyzer 2 and a position in front of a second terminal device for the blood coagulation analyzer 3, a position in front of the maintenance management target for the blood cell analyzer 2 and the blood coagulation analyzer 3, or a position in front of a first maintenance management target for the blood cell analyzer 2 and a position in front of a second maintenance management target for the blood coagulation analyzer 3. The position in front of, for example, the blood cell analyzer 2 means a position apart in the front direction, which is perpendicular to the direction of the main transport path of the transport path 50, from a left-right direction center of the blood cell analyzer 2. The position in front of the blood cell analyzer 2 corresponds to the standing position of the operator which is in the second side (front side) and a position closest to the front edge of the transporter 4.

According to the analysis system 1, it is possible to perform operations on the blood cell analyzer 2 and the blood coagulation analyzer 3 from one side (front side) along the transport path 50, that is, from the second side of the transport path 50, and there is no need to move to the first side (rear side) of the transport path 50. As a result, a walk distance of the operator is shortened, and the workload of the operator is reduced.

FIG. 2 shows a work portion 2Z of the blood cell analyzer 2 and a work portion 3Z of the blood coagulation analyzer 3. The work portions 2Z and 3Z are portions on which at least one of the power operation receiver, the consumable set object, the terminal device and the maintenance management target is arranged. The work portions 2Z and 3Z are portions on which an object on which operations are performed by the operator is arranged, and specifically, portions on which operation buttons, reagents, samples, front covers 11a and 31a, backflow prevention chambers 25 and 46, and the like are arranged. Further, screens of the displays 17 and 37, which will be described later, may be displayed in the work portions 2Z and 3Z. At least one of the power operation receiver, the consumable set object, the terminal device, and the maintenance management target is arranged on the first side (rear side) of the transporter 4 and is accessed across the transporter 4 from the second side (front side) of the transporter 4. Also, at least one of the power operation receiver, the consumable set object, the terminal device and the maintenance management target accessed across the transporter 4 from the second side (front side) of the transporter 4 is arranged in an area within a horizontal distance of 700 mm from the front edge of the transporter 4 in the front-rear direction. In other words, at least one of the power operation receiver, the consumable set object, the terminal device and the maintenance management target accessed across the transporter 4 from the second side (front side) of the transporter 4 is arranged in an area within a horizontal distance of 700 mm from the front edge of the transporter 4 in a direction crossing the transport path 50 from the second side (front side) of the transporter 4 in the shortest distance. In this embodiment, all of the power operation receiver, the consumable set object, the terminal device, and the maintenance management target are arranged only on the first side (rear side) of the transporter 4 or on the first side and below the transport path 50 of the transporter4. In addition, at least one of the power operation receiver, the consumable set object, the terminal device and the maintenance management target may be movable toward the second side of the transporter 4. That is, at least one of these may be movable toward the second side of the transporter 4 and may be accessible at the second side.

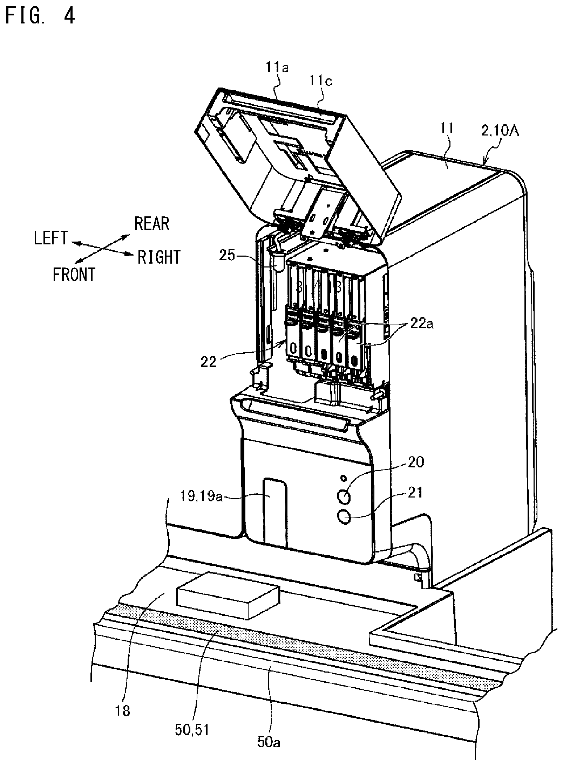

As described above, the blood cell analyzer 2 includes two measurement units 10A and 10B. The measurement units 10A and 10B are arranged adjacent to each other in the left-right direction and have the same shape and size. As shown in FIG. 4, the measurement units 10A and 10B include a housing 11 having a substantially rectangular parallelepiped shape. The housing 11 includes an openable front cover 11a. The front cover 11a is opened by rotating from the bottom to the top, and the inside of the analyzer can be opened by opening the front cover 11a.

The measurement units 10A and 10B each include a sample set holder 19 on which a sample container is set, an open/close button 20 for opening and closing the sample set holder 19, and a measurement start button 21 for starting measurement of a sample set on the sample set holder 19. The sample set holder 19 corresponds to the above-described consumable set object, and the open/close button 20 and the measurement-start button 21 correspond to the operation instruction receiver of the above-described terminal device.

Referring back to FIG. 1 and FIG. 2, the blood cell analyzer 2 includes a transport unit 18 connected to a main transport path constituting the transport path 50. The transport unit 18 includes a sub transport path configured to receive the rack 100 from the first transport path 51, which is the main transport path connecting the rack installation part 5 and the rack collection part 6A, to transport the rack 100 to the sample acquiring position P2 for the blood cell analyzer 2, and return the rack 100 to the first transport path 51. The sub transport path of the transport unit 18 forms a part of the transport path 50 of the transporter 4 together with the first transport path 51. The transport unit 18 is shared by the measurement units 10A and 10B, and the sample container 101 held in the rack 100 is transported to the acquisition position P2 of the measurement unit 10A or the measurement unit 10B.

The blood cell analyzer 2 further includes an analysis device 16 and a display 17. The analysis device 16 is a computer configured to analyze a result of measurement performed by the measurement units 10A and 10B, and is communicably connected to the measurement units 10A and 10B. In the example shown in FIG. 1, a side rack 11b is attached to the side surface of the housing 11, and the analysis device 16 and the display 17 are arranged on the side rack 11b. One analysis device 16 and one display 17 are provided in each blood cell analyzer 2A,2B.

The analysis device 16 may be communicably connected to a host computer 120 in which sample information including a sample identification code such as a sample ID and a measurement item etc. is registered. The analysis system 1 is installed in, for example, a clinical laboratory in a hospital. In this case, an example of the host computer 120 is a clinical test information system that is connected to a plurality of analyzers and centrally manages sample information and measurement orders. The analysis device 16 also includes a power button 16a at a position operable from the front of the analysis system 1. Note that the function of the analysis device 16 may be incorporated in the measurement units 10A and 10B.

The display 17 is a display configured to display a measurement result and the like, and in the present embodiment, is a touch panel type display that also functions as an input device. The display 17 is connected to the analysis device 16 and is communicably connected to the measurement units 10A and 10B via the analysis device 16. For example, an operation signal from the display 17, which is a touch panel, is transmitted to the measurement units 10A and 10B via the analysis device 16. Note that the display 17 may be integrated with the measurement units 10A and 10B.

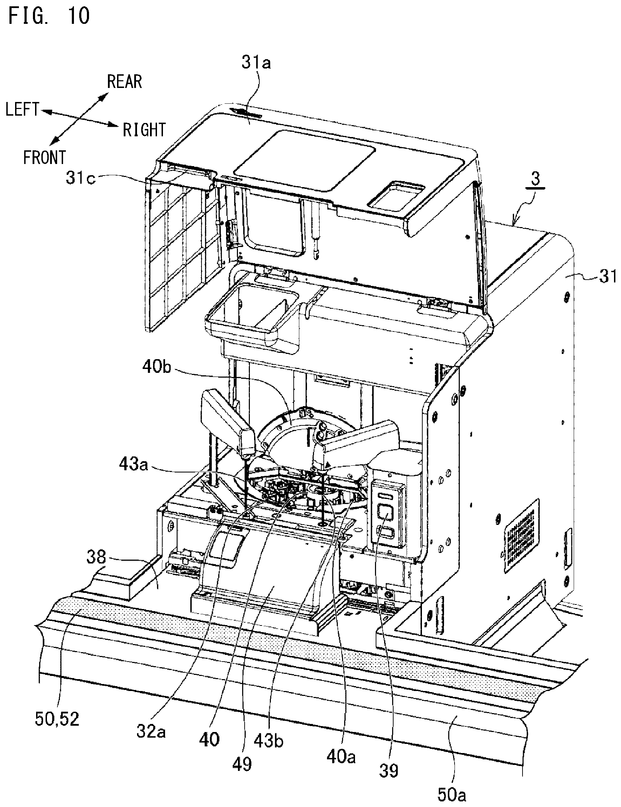

As shown in FIG. 10, the blood coagulation analyzer 3 includes a substantially rectangular parallelepiped housing 31. The housing 31 includes an openable front cover 31a. The front cover 31a is opened by rotating from the bottom to the top, and the inside of the analyzer can be opened by opening the front cover 31a. The blood coagulation analyzer 3 also includes a main power button 35 for activating the blood coagulation analyzer 3 and a measurement start button 39 for starting manual measurement of the sample. The main power button 35 corresponds to the above power operation receiver, and the measurement-start button 39 corresponds to the operation instruction receiver of the above terminal device.

The main power button 35 and the measurement-start button 39 are provided on the front surface of the housing 31 facing the front of the analysis system 1. This makes it easy to operate the buttons from the second side (front side) of the transport path 50. The main power button 35 is arranged directly below the transport path 50, and the measurement start button 39 is arranged above and behind the transport path 50. Further, the blood coagulation analyzer 3 includes a sample set holder 49 on which a sample container is set. The sample set holder 49 corresponds to the above consumable set object and is provided at a position adjoining the transport path 50.

Further, the blood coagulation analyzer 3 includes a transport unit 38 connected to the main transport path constituting the transport path 50. The transport unit 38 includes a sub transport path configured to receive the rack 110 from the second transport path 52, which is the main transport path connecting the rack installation part 5 and the rack collection part 6B, to transport the rack 110 to the acquisition position P3 for the blood coagulation analyzer 3, and return the rack 110 to the second transport path 52. The sub transport path of the transport unit 38 forms a part of the transport path 50 of the transporter 4 together with the second transport path 52.

Referring back to FIG. 1 and FIG. 2, the blood coagulation analyzer 3 includes a main body 30 housed in the housing 31, an analysis device 36, and a display 37. The analysis device 36 is a computer configured to analyze a result of measurement performed by the main body 30 and is communicably connected to the main body 30. In the present embodiment, the main body 30 is a unit structured to optically interrogate a sample, and includes parts of the blood coagulation analyzer 3 other than the analysis device 36 and the display 37. In the example shown in FIG. 1, the display 37 is attached to the side surface of the housing 31, and the analysis device 36 is housed in a side rack 31b attached to the rear of the display 37.

The analysis device 36 may be communicatively connected to the host computer 120. The display 37 is a display configured to display a measurement result and the like, and in the present embodiment, is a touch panel type display that also functions as an input device. The display 37 is connected to the analysis device 36 and is communicably connected to the main body 30 via the analysis device 36. For example, an operation signal from the display 37, which is a touch panel, is transmitted to the main body 30 via the analysis device 36. Note that the function of the analysis device 36 may be incorporated in the main body 30, and the display 37 may be integrated with the main body 30.

The transporter 4 includes the transport path 50 and a transport controller 54 configured to control operations of the transport path 50. The transport path 50 includes, as described above, the first transport path 51 configured to transport the rack 100 to the blood cell analyzer 2, the second transport path 52 configured to transport the rack 110 to the blood coagulation analyzer 3, the transport unit 18 that includes the first sub transport path, and the transport unit 38 that includes the second sub transport path. The transport path 50 includes, for example, a belt conveyor configured to transport the racks 100,110 laterally. The transport unit 18 is connected to the first transport path 51, and the transport unit 38 is connected to the second transport path 52.

The first transport path 51 and the second transport path 52, which are the main transport paths connecting the rack installation part 5 and the rack collection parts 6A,6B, are formed straight without bending in the middle, and are arranged on the same straight line. The first transport path 51 extends straight from a front of the rack installation part 5 to a front of the rack collection part 6A through fronts of the measurement units 10A, 10B of the blood cell analyzer 2. Although the acquisition position P2 for the blood cell analyzer 2 may be set on the first transport path 51, when two blood cell analyzers 2A,2B are provided, the acquisition position P2 is set on the transport unit 18, which includes the sub transport path, so that the sample measurement can be performed more efficiently. In this instance, for example, when the rack 100 is transported to the blood cell analyzer 2A and the sample measurement is being performed, another rack 100 can be transported to the blood cell analyzer 2B to perform the sample measurement.

The second transport path 52 extends straight from a front of the rack installation part 5 to a front of the rack collection part 6B through a front of the main body 30 of the blood coagulation analyzer 3. Similarly, although the acquisition position P3 for the blood coagulation analyzer 3 may be set on the second transport path 52, when two blood coagulation analyzers 3A,3B are provided, the acquisition position P3 is set on the transport unit 38, which includes a sub transport path, so that the sample measurement can be performed more efficiently. Note that a junction of the first transport path 51 and the second transport path 52 in front of the rack installation part 5 includes, for example, a belt conveyor that is used in both the first transport path 51 and the second transport path 52 and transports the rack to both the left direction and the right directions. In the present embodiment, the blood cell analyzer 2 and the blood coagulation analyzer 3 are arranged to face the main transport path of the transport path 50. The work portion 2Z of the blood cell analyzer 2 and the work portion 3Z of the blood coagulation analyzer 3 face the front side of the analysis system 1.

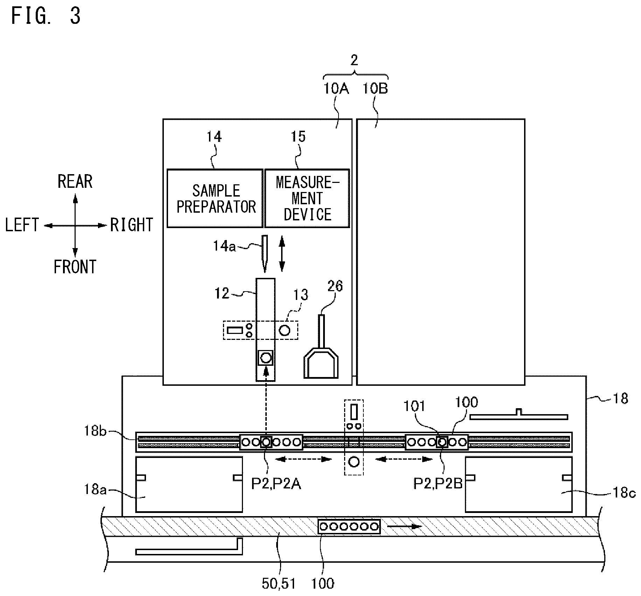

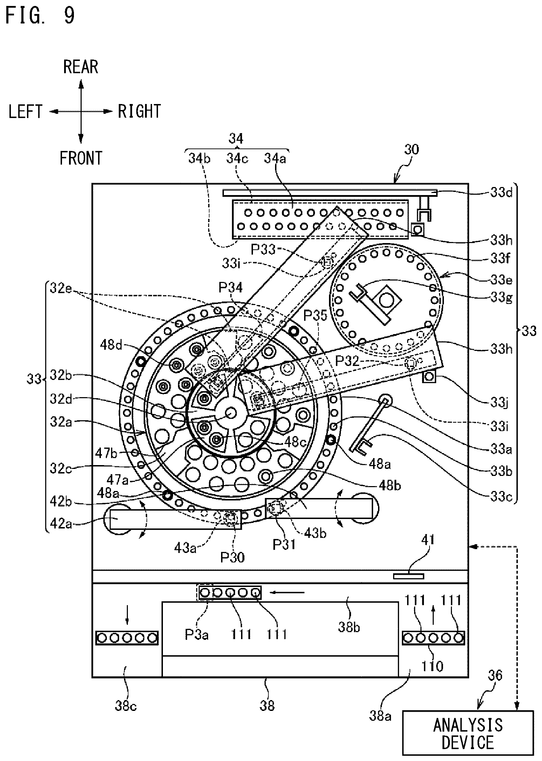

As will be described in detail later, the blood cell analyzer 2 is configured to take the sample container 101 into the analyzer at the acquisition position P2 on the transport unit 18 and aspirate the sample in the analyzer. The blood coagulation analyzer 3 is configured to aspirate the sample at the acquisition position P3 on the transport unit 38. The blood cell analyzer 2 includes an aspiration tube 14a (see FIG. 3 described later) configured to penetrate a cap attached to the sample container 101 to aspirate the sample. The blood coagulation analyzer 3 includes an aspiration tube 43a configured to penetrate a cap attached to the sample container 111 to aspirate the sample, and an aspiration tube 43b configured to dispense a part of the sample from the reaction container containing the sample into another reaction container (see FIG. 9 described later). The aspiration tubes correspond to the above maintenance management target, and cleaning of the aspiration tubes is performed as the maintenance.

The transporter 4 further includes a code reader 55 configured to read an identification code, attached to the sample container 101,111, for individually identifying the respective sample containers. In the present embodiment, the code reader 55 is disposed on the rack installation part 5. The rack installation part 5 includes, for example, a transport path in which adjoining first and second transport paths extending in the front-rear direction are connected at those rear part. The transport path is configured to be able to install racks on front region of the first transport path by the operator. The racks installed on the front region of the first transport path are moved by the first transport path backward and moved forward by the second transport path from its rear region. The second transport path is connected to the transport path 50 and the racks 100,110 are unloaded from the second transport path to the transport path 50.

The code reader 55 reads the identification code of the sample container held in the rack and moving on the transport path of the rack installation part 5. The identification code is, for example, a sample ID, and a barcode label on which a barcode indicating the sample ID is printed is attached to the sample container. The transport controller 54 determines a transport destination of the rack holding the sample container based on the identification code read by the code reader 55. As described above, the rack 100 holding the sample container 101 is transported to the blood cell analyzer 2 through the first transport path 51, and the rack 110 holding the sample container 111 is transported to the blood coagulation analyzer 3 through the second transport path 52. That is, on the basis of the identification code read by the code reader 55, it is determined whether the rack is the rack 100 or the rack 110.

In the analysis system 1, most portions of the blood cell analyzer 2 and the blood coagulation analyzer 3 are arranged behind the transport path 50 which is the first side of the transporter 4. Note that the lower portions of the blood cell analyzer 2 and the blood coagulation analyzer 3 are arranged directly below the transport path 50. In the analysis system 1, the standing position of the operator is set on one side (front side/second side) of the transport path 50, and the blood cell analyzer 2 and the blood coagulation analyzer 3 are arranged on the other side (rear side/first side) of the transport path 50. The power operation receiver, the terminal device, and the like operated by the operator are provided such that a portion to be operated by the operator faces the front of the analysis system 1 so as to be able to be operated from the one side (front side/second side) of the transport path 50.

The power operation receiver includes at least one of a startup instruction receiver configured to receive a startup instruction for the blood cell analyzer 2 and the blood coagulation analyzer 3, and a shutdown instruction receiver configured to receive a shutdown instruction for the blood cell analyzer 2 and the blood coagulation analyzer 3. In the present embodiment, the startup instruction receivers are separately provided in the blood cell analyzer 2 and the blood coagulation analyzer 3. The shutdown instruction receivers are separately provided in the blood cell analyzer 2 and the blood coagulation analyzer 3. Thus, the operator can individually activate each analyzer and individually shut down each analyzer.

The blood cell analyzer 2 includes a power button 16a of the analysis device 16 as the startup instruction receiver. The blood cell analyzer 2 is configured such that when the operator operates the power button 16a, the analysis device16 is activated and the measuring units 10A and 10B are also activated. The blood coagulation analyzer 3 includes a main power button 35 as the startup instruction receiver. Both the power button 16a and the main power button 35 are arranged such that their operating surfaces face the front of the analysis system 1 and are operable from one side (front side) of the transport path 50. That is, the blood cell analyzer 2, the blood coagulation analyzer 3 and the transporter 4 are arranged in positions and orientations that allow access to the startup instruction receiver from at least one position along one side (front side/second side) of the transport path 50. In other words, the blood cell analyzer 2, the blood coagulation analyzer 3, and the transporter 4 are arranged in positions and orientations that allow access to the startup instruction receiver from the second side (front side) of the transporter 4. The at least one position along one side of (front side/second side) the transport path 50 may be a position in front of the startup instruction receiver. The at least one position along one side of (front side/second side) the transport path 50 may be a position in front of the power button 16a and a position in front of the main power button 35.

The operating surface of the power button 16a of the blood cell analyzer 2 is arranged to face the transport path 50. In other words, the operating surface of the power button 16a is arranged to be parallel to the longitudinal direction of the main transport path of the transport path 50. This improves operability of the power button 16a from the front of the transport path 50. The main power button 35 of the blood coagulation analyzer3 is, for example, a lever-type switch, but may be a press-type switch similar to the power button 16a. Further, the main power button 35 may be arranged such that its operating surface faces the transport path 50 at the rear of the transport path 50.

The terminal device is a device configured to execute at least one of reception of an operation instruction and display of information for the blood cell analyzer 2 and the blood coagulation analyzer 3. That is, the terminal device includes at least one of the operation instruction receiver and an information display. The terminal device broadly includes an operation receiver that does not fall under the power operation receiver. It should be noted that the terminal device and the power operation receiver do not need to be clearly distinguished from each other in the configuration of the present disclosure. In the present embodiment, the displays 17 and 37, which are touch panels, function as terminal device configured to receive operation instructions and display information. The operation buttons of the respective devices correspond to the operation instruction receiver of the terminal device.

A screen including the operation instruction receiver configured to receive the operation instructions for the blood cell analyzer 2 is displayed on the display 17, and a screen including the operation instruction receiver configured to receive the operation instructions for the blood coagulation analyzer 3 is displayed on the display 37. Each of the displays 17 and 37 is arranged such that a display on which the operation instruction receiver is displayed faces the front of the analysis system 1 and is operable from one side (front side/second side) of the transport path 50. That is, the blood cell analyzer 2, the blood coagulation analyzer 3, and the transporter 4 are arranged in positions and orientations that allow access to the displays 17, 37 from at least one position along one side (front side/second side) of the transport path 50. In other words, the blood cell analyzer 2, the blood coagulation analyzer 3, and the transporter 4 are arranged in positions and orientations that allow access to the displays 17, 37 from the second side (front side) of the transporter 4. The at least one position along one side (front side/second side) of the transport path 50 may be a position in front of the display 17 and a position in front of the display 37.

In the analysis system 1, it is preferable that the blood cell analyzer 2 and the blood coagulation analyzer 3 are arranged such that the work portion 2Z and the work portion 3Z are arranged in an area within a horizontal distance of 700 mm from the front edge of the transporter 4 in the front-rear direction. In this embodiment, the front edge 50a of the transporter 4 is located at the foremost position of the analysis system 1. In this case, good operability is obtained.

Specifically, it is preferable that the front cover 11a, the sample set holder 19, the open/close button 20, and the operation button such as the measurement start button 21, the power button 16a, the display 17 of the blood cell analyzer 2 are arranged in an area within a horizontal distance of 700 mm from the front edge 50a of the transporter 4 in the front-rear direction. Similarly, the front cover 31a, the sample set holder 49, the operation button such as the measurement start button 39, the main power button 35, the display 37 of the blood coagulation analyzer 3, are preferably disposed in an area within a horizontal distance of 700 mm from the front edge 50a of the transporter 4 in the front-rear direction. In addition, it is preferable that the operation surfaces of the respective buttons and the screens of the displays 17 and 37 be arranged to face the transport path 50.

Hereinafter, a blood cell analyzer 2 included in the analysis system 1 will be described in detail with reference to FIGS. 3 to 8.

FIG. 3 is a diagram illustrating an interior configuration of the blood cell analyzer 2. As shown in FIG. 3, the blood cell analyzer 2 includes the measurement units 10A and 10B and the transport unit 18 connected to the first transport path 51. The measurement units 10A and 10B and the transport unit 18 are disposed behind the first transport path 51. The measurement units 10A and 10B take out the sample container 101 from the rack 100 transported on an intermediate transport path 18b of the transport unit 18, introduce the sample container 101 into the unit, and measure the sample contained in the sample container 101. For example, the measurable items of the measurement units 10A and 10B are the same. In the measurement units 10A and 10B, some of the measurable items may be different from each other. Although FIG. 3 illustrates the internal structure of the measurement unit 10A, the measurement unit 10B also may have the same device structure.

The transport unit 18 has a transport path formed in about U-shape in a plan view. The transport unit 18 includes a transport path 18a configured to load the rack 100 from the first transport path 51, the intermediate transport path 18b, and a transport path 18c configured to unload the rack 100 to the first transport path 51. The intermediate transport path 18b is a transport path connecting the transport path 18a and the transport path 18c, and is arranged to be parallel to the first transport path 51. On the intermediate transport path 18b, an acquisition position P2A of the sample for the measurement unit 10A and an acquisition position P2B of the sample for the measurement unit 10B are set. The intermediate transport path 18b includes, for example, a belt conveyor and is configured to be able to move the rack 100 in the left-right direction.

The measurement unit 10A can measure, for example, complete blood count (CBC) items and white blood cell differential (DIFF) items. The CBC items include WBC (white blood cell count), RBC (red blood cell count), HGB (hemoglobin amount), HCT (hematocrit value), MCV (mean corpuscular volume), MCH (mean corpuscular hemoglobin), MCHC (mean corpuscular hemoglobin concentration), PLT (platelet count). The DIFF items include NEUT# (neutrophil count), LYMPH# (lymphocyte count), MONO# (monocyte count), EO# (eosinophil count), BASO# (basophil count). The measurement unit 10B may be capable of measuring, for example, a RET item and PLT-F item in addition to the CBC items and the DIFF items. The RET item includes RET# (reticulocyte count). The PLT-F item includes PLT# (optically measured platelet count).

The measurement unit 10A includes a container transporter 12, a code reader 13, a sample preparator 14, a measurement device 15, and a robot hand 26. The robot hand 26 is configured to take out the sample container 101 from the rack 100 on the acquisition position P2 on the intermediate transport path 18b, swing the taken sample container 101 a predetermined number of times to agitate the sample, and then place it on the container transporter 12. The container transporter 12 is configured to hold the sample container 101 in an upright state and transport the sample container 101 in the front-rear direction. The code reader 13 is provided in a transport path of the sample container 101 by the container transporter 12 and configured to read the sample IDs from the labels attached to the sample containers 101.

Operations of the measurement units 10A and 10B and the transport unit 18 are controlled by a controller of the analysis device 16. The controller is programmed to query the host computer 120 for a measurement order based on the sample IDs read by the code reader 13, and acquire the measurement order for the sample from the host computer 120. The measurement unit into which the sample container 101 is introduced is determined by the controller so that loads on the measurement units 10A and 10B are distributed. For example, a sample container 101 having an odd number of holding parts in the rack 100 is introduced into the measurement unit 10A, and a sample container 101 having an even number is introduced into the measurement unit 10B.

The sample preparator 14 includes an aspiration tube 14a. The aspiration tube 14a is configured to aspirate the sample through the cap of the sample container 101 disposed on the container transporter 12. When aspiration of the sample is completed, the sample container 101 is transported forward by the container transporter 12 and returned to the original holder of the rack 100 on the acquisition position P2 by the robot hand 26. The sample preparator 14 includes, for example, a reaction chamber and a reagent suppler 22, and is configured to prepare a measurement sample by mixing the aspirated sample and a reagent in the reaction chamber. A plurality of reaction chambers are provided according to measurement types, and a plurality of types of reagents (dyeing liquid, etc.) corresponding to measurement items are supplied to each reaction chamber, and the measurement samples corresponding to the various measurement items are prepared.

The measurement device 15 includes an RBC detector configured to perform RBC detection and PLT detection by a sheath flow DC detection method, and a HGB detector configured to perform HGB detection by a SLS-hemoglobin method. Further, the measurement device 15 includes a flow cytometer (FCM) configured to perform WBC detection by flow cytometry using a light source such as semiconductor laser. The prepared measurement sample is supplied to the RBC detector, the HGB detector, and the FCM. Detection results obtained by the measurement device 15 are transmitted to the analysis device 16 as sample measurement data.

The aspiration tube 14a is disposed inside the housing 11, and visible by opening the front cover 11a. The aspiration tube 14a is a maintenance management target for which maintenance such as cleaning is performed periodically or when an abnormality occurs in a measurement result. For example, a cleaning operation such as wiping of an adhered sample is performed periodically or when an abnormality occurs in a measurement result. As will be described in detail below, the front cover 11a can be opened from the front of the analysis system 1 and the operator can clean the aspiration tube 14a from the front of the system. That is, the blood cell analyzer 2 and the transporter 4 are arranged in positions and orientations that allow access to the aspiration tube 14a from at least one position along one side (front side) of the first transport path 51. In other words, the blood cell analyzer 2 and the transporter 4 are arranged in positions and orientations that allow access to the aspiration tube 14a from the second side (front side) of the transporter 4. In other words, the blood cell analyzer 2 and the transporter 4 are arranged in positions and orientations that allow access to the aspiration tube 14a from the second side (front side) of the transporter 4. The at least one position along one side (front side) of the first transport path 51 may be a position in front of the aspiration tube 14a. It is preferable that the aspiration tube 14a is arranged within a horizontal distance length of 700 mm from the front edge of the transporter 4 in the front-rear direction. In this case, workability is improved.

FIG. 4 is a diagram showing an upper portion of the blood cell analyzer 2 (measurement unit 10A) with the front cover 11a opened. As shown in FIG. 4, a reagent supplier 22 on which a reagent is set, a backflow prevention chamber 25, and the like are disposed inside the blood cell analyzer 2 covered with the front cover 11a. The front cover 11a forms a part of the front surface of the housing 11 and is configured to rotate from bottom to top to open. The front cover 11a is rotatably fixed to an upper surface of the housing 11 via a hinge.

A handle 11c is provided at a lower portion of the front cover 11a. The handle 11c is an operation target used to open the front cover 11a. The handle 11c is formed, for example, by fixing a member having a recess into which a finger can be inserted to an inner surface of the front cover 11a with the recess facing downward. The handle 11c is disposed on the front cover 11a. Therefore, the operator can easily open the front cover 11a from the front of the analysis system 1. The handle 11c is accessed from the second side (front side) of the first transport path 51 across the first transport path 51.

The reagent supplier 22 includes a reagent container holder 22a disposed inside the front cover 11a and holding a plurality of reagent containers containing a predetermined amount of reagent. The reagent container holder 22a corresponds to the reagent set object on which a reagent container is set. An aspiration tube configured to aspirate the reagent in the reagent container is disposed inside and in rear part of the reagent container holder 22a. The reagent container holder 22a includes, for example, five holders and is configured to be able to hold five types of reagent containers. The reagent container held in the reagent container holder 22a contains a reagent (staining liquid) for measuring a plurality of measurement items by the FCM.

The reagent supplier 22 is disposed inside the housing 11, and can be accessed by opening the front cover 11a. As described above, the front cover 11a can be opened from the front of the analysis system 1, and the reagent supplier 22 is configured to allow the reagent container to be replaced by the operator from the front of the analysis system 1. That is, the blood cell analyzer 2 and the transporter 4 are arranged in positions and orientations that allow access to the reagent supplier 22 from at least one position along one side (front side/second side) of the first transport path 51. In other words, the blood cell analyzer 2 and the transporter 4 are arranged in positions and orientations that allow access to the reagent supplier 22 from the second side (front side) of the transporter 4. The at least one position along one side (front side/second side) of the first transport path 51 may be a position in front of the reagent supplier 22. More specifically, the blood cell analyzer 2 and the transporter 4 are arranged in positions and orientations that allow the operator to attach a reagent container to and remove a reagent container from the reagent container holder 22a from at least one position along one side (front side/second side) of the first transport path 51. In other words, the blood cell analyzer 2 and the transporter 4 are arranged in positions and orientations that allow the operator to attach a reagent container to and remove a reagent container from the reagent container 22a from the second side (front side) of the transporter 4. The at least one position along one side (front side/second side) of the first transport path 51 may be a position in front of the reagent container holder 22a. The reagent supplier 22 is accessed from the second side (front side/second side) of the first transport path 51 across the first transport path 51. In addition, it is preferable that the reagent supplier 22 be arranged within a horizontal distance of 700 mm from the front edge of the transporter 4 in the front-rear direction.

The backflow prevention chamber 25 is disposed in a position aligned with the reagent supplier 22 in the left-right direction in the blood cell analyzer 2 covered with the front cover 11a. The backflow prevention chamber 25 prevents backflow from the reaction chamber to the reagent supplier 22. The backflow prevention chamber 25 is a maintenance target for which maintenance such as visual confirmation and cleaning are performed periodically or when an abnormality occurs in a measurement result. The backflow prevention chamber 25 is visible and capable of being cleaned from the front of the analysis system 1. That is, the blood cell analyzer 2 and transporter 4 are arranged in positions and orientations that allow visual confirmation and access to the backflow prevention chamber 25 from at least one position along one side (front side/second side) of the first transport path 51. In other words, the blood cell analyzer 2 and the transporter 4 are arranged in positions and orientations that allow access to the backflow prevention chamber 25 from the second side (front side) of the transporter 4. The at least one position along one side (front side/second side) of the first transport path 51 may be a position in front of the backflow prevention chamber 25. The backflow prevention chamber 25 is accessed from the second side (front side/second side) of the first transport path 51 across the first transport path 51. It is preferable that the backflow prevention chamber 25 is arranged within a horizontal distance of 700 mm from the front edge of the transporter 4 in the front-rear direction.

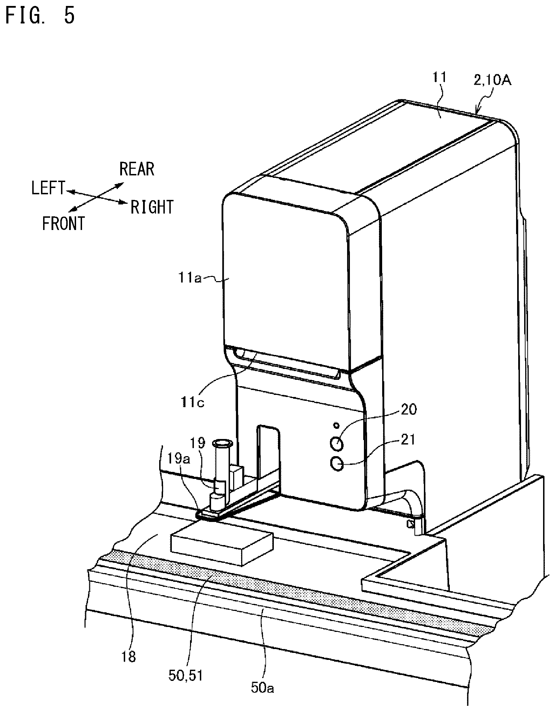

FIG. 5 is a diagram illustrating an upper part of the blood cell analyzer 2 (measurement unit 10A) and illustrating a state in which manual measurement of a quality control substance is performed. Note that the quality control substance is also generally referred to as a quality control sample. As shown in FIG. 5, a sample set holder 19 is disposed at a lower front portion of the measurement unit 10A so that the cover 19a (see FIG. 4) is opened and pulled out forward, and a sample container containing a quality control sample can be placed thereon. An open/close button 20 and a measurement start button 21 are disposed at the lower front portion of the measurement unit 10A. The sample set holder 19 can be opened and closed by operating the open/close button 20, and measurement of the sample set on the sample set holder 19 is started by operating the measurement start button 21. For example, a sample container is set on the sample set holder 19 in a case where a quality control sample or an emergency sample is measured, and a cleaning liquid container in which a cleaning liquid is contained is set in a case where fluid paths and detectors in the analyzer are cleaned.

The sample set holder 19, the open/close button 20, and the measurement start button 21 are arranged on the front surface of the measurement unit 10A facing the first transport path 51. The operator can place the sample container on the sample set holder 19 from the front of the analysis system 1. Further, operation surfaces of the open/close button 20 and the measurement start button 21 are arranged to face the first transport path 51. The operator can easily operate the open/close button 20 and the measurement start button 21 from the front of the analysis system 1. That is, the blood cell analyzer 2 and the transporter 4 are arranged in positions and orientations that allow access to the sample set holder 19, the open/close button 20, and the measurement start button 21 from at least one position along one side (front side/second side) of the first transport path 51. In other words, the blood cell analyzer 2 and the transporter 4 are arranged in positions and orientations that allow access to the sample set holder 19, the open/close button 20, and the measurement start button 21 from the second side (front side) of the transporter 4. The at least one position along one side (front side/second side) of the first transport path 51 may be a position in front of the sample set holder 19, a position in front of the open/close button 20, and a position in front of the measurement start button 21. The sample set holder 19, the open/close button 20, and the measurement start button 21 are accessed from the second side (front side/second side) of the first transport path 51 across the first transport path 51. In addition, it is preferable that the sample set holder 19, the open/close button 20, and the measurement start button 21 be arranged within a horizontal distance of 700 mm from the front edge of the transporter 4 in the front-rear direction.

The blood cell analyzer 2 includes an error handling object on which an error occurred in the analyzer is handled. An example of an error is an error in which a measurement result of a quality control sample is outside a control range. When the error occurs, for example, re-measurement of the quality control sample is performed, and a quality control sample having a different lot number is set on the sample set holder 19. Therefore, the sample set holder 19 corresponds to the error handling object.

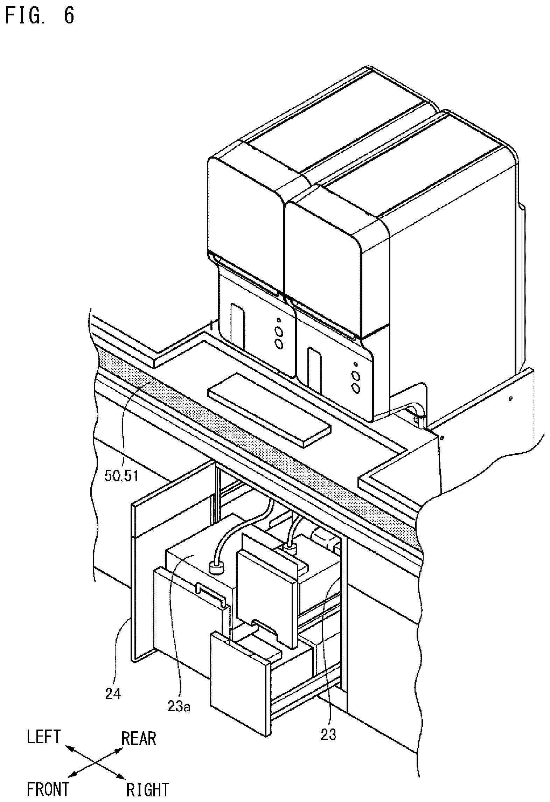

FIG. 6 is a diagram showing a lower portion of the blood cell analyzer 2 in which a door 24 is opened. As shown in FIG. 6, a cleaning liquid set holder 23 on which a cleaning liquid container 23a containing a cleaning liquid for cleaning the analyzer is set is disposed at a lower portion of the blood cell analyzer 2. The cleaning liquid set holder 23 may have, for example, a space in which the cleaning liquid container 23a can be accommodated, and may include a drawer, a shelf, a carriage, or the like that accommodates the cleaning liquid container 23a in the space. The lower part of the blood cell analyzer 2 is provided with the door 24 which forms the front surface of the analyzer and closes the cleaning liquid set holder 23.

The cleaning liquid set holder 23 is disposed below the measurement units 10A and 10B and the transport path 50, and is configured to take in and out the cleaning liquid container 23a by the operator with the door 24 opened from the front of the analysis system 1. That is, the blood cell analyzer 2 and the transporter 4 are arranged in positions and orientations that allow access to the cleaning liquid set holder 23 from at least one position along one side (front side) of the first transport path 51. In other words, the blood cell analyzer 2 and the transporter 4 are arranged in positions and orientations that allow access to the cleaning liquid set holder 23 from the second side (front side) of the transporter 4. The at least one position along one side (front side) of the first transport path 51 may be a position in front of the cleaning liquid set holder 23. For example, the left end of the door 24 is fixed to the lower side surface of the housing 11 via a hinge so as to rotate from right to left to open the door 24. The cleaning liquid set holder 23 is arranged on a first side (rear side) of the transporter 4 and is configured to be movable on a second side (front side) of the transporter 4. For example, the drawer, the carriage, and the like included in the cleaning liquid set holder 23 can be pulled out to the second side (front side) of the transporter 4, and the cleaning liquid container 23a can be taken in and out from the second side (front side) by the operator.

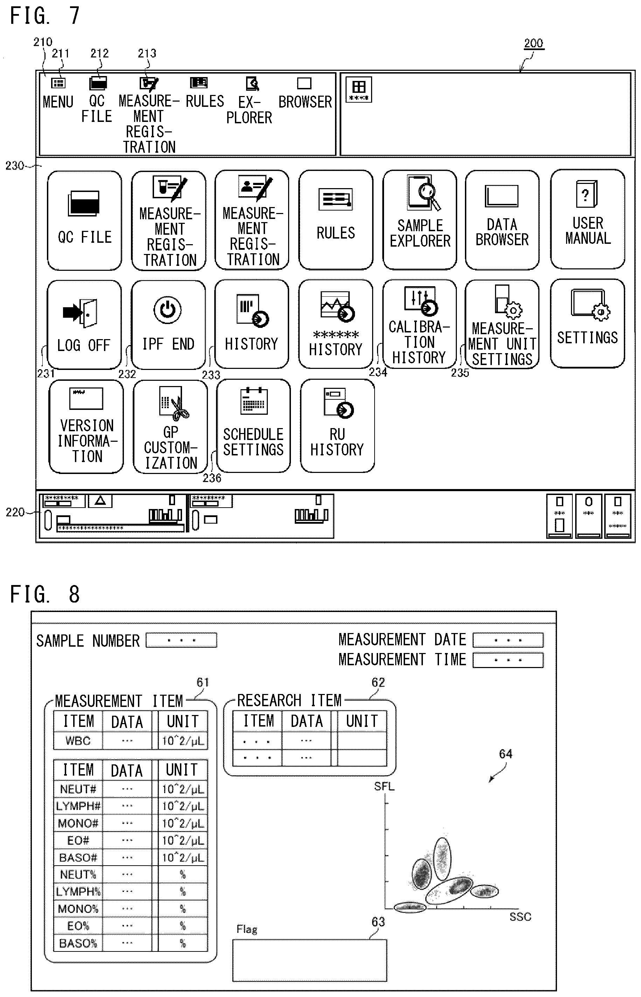

FIG. 7 is a diagram illustrating an exemplary operation screen of the blood cell analyzer 2. As shown in FIG. 7, the operation screen 200 includes a toolbar 210 including main function buttons, a status display area 220 including indicators indicating information such as an analyzer state, a host computer state, remaining amounts of a reagent, a consumable, and the like, and a menu icon display area 230. The operation screen 200 is displayed on the display 17. On the display 17, in addition to the operation screen 200, an order screen on which sample information is input when manual measurement is performed, a quality control screen including information on quality control, a result display screen described later, and the like are output.

The tool bar 210 includes a menu button 211, a QC file button 212 to display a quality control screen, a measurement registration button 213 to display an order screen, and the like. In the menu icon display area 230, a plurality of buttons (icons) for performing various operations and displaying information may be displayed, and the same buttons as those included in the toolbar 210 may be displayed. The menu icon display area 230 includes a log-off button 231, a shutdown button 232, a history button 233, a calibration history button 234, a measurement unit setting button 235, a schedule setting button 236, and the like.

The shutdown button 232 displayed on the operation screen 200 corresponds to the shutdown instruction receiver configured to receive a shutdown instruction for the blood cell analyzer 2. The operation buttons other than the shutdown button 232 correspond to the operation instruction receiver configured to receive an operation instruction for the blood cell analyzer 2. The screen of the display 17 is a touch panel screen configured to receive the operation instructions and display information, and is arranged in a direction facing the first transport path 51. That is, the screen of the display 17 is oriented in the front of the analysis system 1, and the blood cell analyzer 2 and the transporter 4 are arranged in positions and orientations that allow access to the shutdown button 232 and the various operation buttons from at least one position along one side (front side/second side) of the first transport path 51. In other words, the blood cell analyzer 2 and the transporter 4 are arranged in positions and orientations that allow access to the shutdown button 232 and the various operation buttons from the second side (front side) of the transporter 4. The at least one position along one side (front side/second side) of the first transport path 51 may be a position in front of the display 17. The at least one position along one side (front side) of the first transport path 51 may be a position in front of the shutdown button 232 and positions in front of the various operation buttons on the operation screen 200. The display 17 is accessed from the second side (front side) of the first transport path 51 across the first transport path 51.

FIG. 8 is a diagram illustrating an example of the result display screen for the blood cell analyzer 2. As illustrated in FIG. 8, the result display screen includes regions 61 to 64 in addition to a sample number and a measurement date and time of a blood sample. Region 61 is a region displaying numbers of neutrophils (NEUT), lymphocytes (LYMPH), monocytes (MONO), eosinophils (EO), and basophils (BASO) as well as a number of leukocytes (WBC) and each ratio to the number of white blood cells. In the region 62, a measurement result of a research item is displayed. Flag information indicating that the blood sample is suspected of containing a predetermined abnormal cell or the like is displayed in the region 63. In the region 64, a scattergram is displayed. This scattergram is a two-dimensional scattergram in which the horizontal axis represents a side scattering intensity and the vertical axis represents a fluorescence intensity. The scattergram may be a three-dimensional scattergram. The result display screen is displayed on the display 17. Note that a result display screen other than the result display screen illustrated in FIG. 8 may be output to the display 17.

The result display screen displayed on the display 17 corresponds to an analysis result screen displaying an analysis result of the blood cell analyzer 2. As described above, the display 17 is arranged to face the first transport path 51, that is, to face the front of the analysis system 1. The blood cell analyzer 2 and the transporter 4 are arranged in positions and orientations that allow viewing of the analysis result displayed on the analysis result screen from at least one position along one side (front side/second side) of the first transport path 51. In other words, the blood cell analyzer 2 and the transporter 4 are arranged in positions and orientations that allow viewing of the analysis result displayed on the analysis result screen from the second side (front side) of the transporter 4. The at least one position along one side (front side/second side) of the first transport path 51 may be a position in front of the display 17.

Now, referring to FIGS. 9 to 13, the blood coagulation analyzer 3 included in the analysis system 1 will be described in detail. The blood coagulation analyzer 3 is an analyzer configured to analyze a blood coagulation function by, for example, a clotting method, a chromogenic method, an immunoassay method, and an aggregation method, and an analyzer configuration will be described below by taking a measurement by the clotting method as an example.

FIG. 9 is a diagram illustrating an interior configuration of the blood coagulation analyzer 3. As shown in FIG. 9, the blood coagulation analyzer 3 includes a measurement sample preparator 33 configured to prepare a measurement sample containing a sample and a reagent, and a measurement device 34 configured to optically measure the measurement sample. The measurement sample is prepared, for example, by mixing a sample with a coagulation measurement reagent such as a prothrombin time (PT) measurement reagent or an activated partial thromboplastin time (APTT) measurement reagent, and then mixing a reagent for starting blood coagulation such as a calcium liquid. The measurement device 34 measures optical information of the prepared measurement sample.

The sample is prepared by centrifuging a whole blood sample collected from a subject. The sample is, for example, a supernatant obtained by centrifuging blood to which an anticoagulant has been added. The sample container 111 containing the sample is arranged in the rack 110.

The coagulation measurement reagent is, for example, a reagent containing an activator and a phospholipid in a case of the APTT measurement reagent. Commercially available reagents such as Revohem^{®} APTT SLA (Sysmex Co., Ltd.), Thrombocheck^{®} APTT SLA (Sysmex Co., Ltd.), Coagpia^{®} APTT-N (Sekisui Medical Co., Ltd.), and Data Actin APTT (Siemens Healthcare Diagnostics Products GmbH Co., Ltd.) may be used as the APTT measuring reagent.

The measurement sample preparator 33 includes a reagent holding table 32a. The reagent holding table 32a is a circular table. The reagent holding table 32a corresponds to the reagent set object on which a reagent is set. On the reagent holding table 32a, a plurality of container racks 47a and 47b are arranged along the circumferential direction of the table. Reagent containers 48b, 48c, 48d containing a solution containing a reagent are set in the container racks 47a and 47b. The reagent containers 48b, 48c, 48d, and the like contain, for example, the coagulation measurement reagent or the calcium liquid, respectively. The reagent containers 48b, 48c, 48d, and the like are arranged in the container racks 47a, 47b by the operator in a state in which the container racks 47a, 47b are removed from the reagent holding table 32a. Placement of the container racks 47a and 47b, on which the reagent containers 48b, 48c, 48d are held, on the reagent holding table 32a is performed by the operator with the front cover 31a opened.

The reagent holding table 32a includes a first table 32b having a circular shape in plan view and a second table 32c having an annular shape in plan view provided on an outer periphery of the first table 32b. In the example shown in FIG. 9, four container racks 47a are arranged on the first table 32b along the circumferential direction. Three large container racks 47b are arranged along the circumferential direction on the second table 32c. The first table 32b and the second table 32c are each independently rotatable in the circumferential direction about a rotation shaft 32d by a rotation mechanism including an electric motor, and can move the reagent containers 48b, 48c, 48d, and the like to predetermined positions by the rotation. When the reagent containers 48b, 48c, 48d, and the like are replaced, the first table 32b or the second table 32c is rotated, and the reagent containers 48b, 48c, 48d, and the like to be replaced are stopped at an angular position arranged on the most front side in the analyzer. This allows the operator to access the reagent holding table 32a from at least one position along one side (front side) of the transport path 50. In other words, this allows the operator to access the reagent holding table 32a from the second side (front side) of the transporter 4. That is, the operator can attach and detach the container racks 47a and 47b to/from the reagent holding table 32a from at least one position along one side (front side) of the transport path 50. The at least one position along one side (front side) of the transport path 50 may be a position in front of the holding table 32a. The reagent holding table 32a is accessed from the second side (front side) of the second transport path 52 across the second transport path 52.

The sample preparator 33 includes a code reader 32e configured to read identification codes attached to the reagent containers 48b, 48c, 48d, and the container racks 47a, 47b, respectively. By reading the identification codes by the code reader 32e, respective positions of the reagent containers 48b, 48c, 48d, and the like on the reagent holding table 32a can be identified.

The measurement sample preparator 33 includes first dispensers 42a and 42b configured to dispense a sample. Each of the first dispensers 42a and 42b includes a rotatable dispensing arm configured to hold an aspiration tube 43a, 43b. The aspiration tube 43a, 43b is configured to aspirate a predetermined amount of fluid and dispense a predetermined amount of the aspirated fluid. In order to penetrate the cap attached to an opening of the sample container 111, the aspiration tube 43a has a sharp leading edge. The first dispenser 42a moves the aspiration tube 43a into the sample container 111 to aspirate a predetermined amount of sample from the sample container 111, and dispenses a predetermined amount of the sample into the reaction container 48a. The first dispenser 42b moves the aspiration tube 43b into the reaction container 48a in which the sample has been dispensed, aspirates a part of the sample from the reaction container 48a, and dispenses the part of the sample into another reaction container 48a. In case a plurality of measurement items are ordered, the first dispenser 42b again moves the aspiration tube 43b into the reaction container 48a in which the sample has been dispensed, aspirates another part of the sample from the reaction container 48a, and dispenses the another part of the sample to the other reaction container 48a.

The transport unit 38 is configured to transport the sample container 111 held in the rack 110 to a predetermined sample acquisition position P3a. The sample acquisition position P3a corresponds to the sample acquisition position P3 for the blood coagulation analyzer 3. The transport unit 38 includes a code reader 41 configured to read sample IDs from labels attached to the sample containers 111. Operations of the main body 30 and the transport unit 38 are controlled by a controller of the analysis device 36. The controller is programmed to query the host computer 120 for a measurement order based on the sample IDs read by the code reader 41, and acquire the measurement order for the sample from the host computer 120.

The transport unit 38 has a transport path formed in about U-shape in a plan view. The transport unit 38 includes a transport path 38a configured to load the rack 110 from the second transport path 52, an intermediate transport path 38b, and a transport path 38c configured to unloading the rack 110 to the second transport path 52. The intermediate transport path 38b is a transport path connecting the transport path 38a and the transport path 38c, and is arranged to be parallel to the second transport path 52. In the present embodiment, the sample acquisition position P3a is set on the intermediate transport path 38b. The intermediate transport path 38b includes, for example, a belt conveyor and is configured to be able to move the rack 110 in the left-right direction.

The blood coagulation analyzer 3 may include a sample container fixer configured to fix the sample container 111 disposed at the sample acquisition position P3a on the intermediate transport path 38b during penetration of the cap of the sample container 111 and aspiration of the sample by the aspiration tube 43a. Here, the sample can be stably collected from the sample container 111 located on the intermediate transport path 38b. Note that the sample container fixer may fix the sample container 111 held in the rack 110 by fixing the rack 110.

The measurement sample preparator 33 includes a rotatable table 33a configured to transport the reaction containers 48a. The rotatable table 33a is arranged outside the reagent holding table 32a. The rotatable table 33a has a ring shape in a plan view and is rotatable in the circumferential direction. The rotatable table 33a is provided with a plurality of holding holes 33b arranged along the circumferential direction. Each of the holding holes 33b can hold the reaction container 48a one by one.

The sample is dispensed into the reaction container 48a by the first dispensers 42a and 42b. As described above, the first dispenser 42a moves the aspiration tube 43a to aspirate a predetermined amount of sample from the sample container 111 disposed at the sample acquisition position P3a on the transport unit 38, and dispense a part of the sample into the reaction container 48a. The first dispenser 42b moves the aspiration tube 43b to aspirate a part of the sample from the reaction container 48a in which the sample has been dispensed, and dispenses the sample into another reaction container 48a.

The measurement sample preparator 33 includes a gripping mechanism 33c capable of transporting the reaction container 48a and a warming table 33e holding and warming the reaction container 48a. The gripping mechanism 33c is configured to grip and transport the reaction container 48a. The gripping mechanism 33c transports empty reaction containers 48a in the holding holes 33b on the rotatable table 33a.

The measurement sample preparator 33 includes two second dispensers 33h. Each of the second dispensers 33h includes an aspiration tube 33i. The second dispenser 33h moves the aspiration tube 33i into the reagent containers 48b, 48c, 48d, and the like arranged at predetermined reagent aspiration positions P34, P35 on the reagent holding table 32a, and aspirates a predetermined amount of the coagulation measurement reagent from the reagent containers 48b, 48c, 48d, and the like. Thereafter, the second dispenser 33h moves into the reaction container 48a arranged on the rotatable table 33a, and dispenses the aspirated predetermined amount of the coagulation measurement reagent into the reaction container 48a containing the sample.

The warming table 33e is a circular table incorporating a heater, and includes a plurality of holding holes 33f for holding a plurality of the reaction containers 48a each containing a mixture of a sample and the coagulation measurement reagent, and a gripping mechanism 33g configured to grip and transport the reaction containers 48a. A plurality of holding holes 33f are arranged along the circumferential direction on the warming table 33e. The warming table 33e is rotatable in the circumferential direction, and configured to transport the reaction containers 48a arranged in the plurality of holding holes 33f in the circumferential direction by rotation while the reaction containers 48a are heated to a predetermined temperature by the heater. The gripping mechanism 33g is configured to take out the reaction container 48a in which the coagulation measurement reagent has been dispensed from the holding hole 33b on the rotatable table 33a, and arrange the reaction container 48a in any one of the holding holes 33f.

The measurement sample preparator 33 further includes a gripping mechanism 33d configured to transport the reaction container 48a. The gripping mechanism 33d includes a movement mechanism and configured to transport the reaction container 48a in each of the X, Y, and Z directions that are three orthogonal directions. After the mixed liquid in the reaction container 48a is warmed by the warming table 33e for a predetermined time, the gripping mechanism 33d grips the reaction container 48a and arranges the mixed liquid at one of the reagent dispensing positions P32 and P33. The second dispenser 33h moves the aspiration tube 33i into the reagent containers 48b, 48c, 48d, or the like arranged at predetermined reagent aspiration positions P34, P35 on the reagent holding table 32a, and aspirates a predetermined amount of the calcium liquid from the reagent containers 48b, 48c, 48d, or the like. Thereafter, the second dispenser 33h moves the aspiration tube 33i into the reaction container 48a in which the heated mixed liquid has been dispensed and disposed at the reagent dispensing positions P32, P33, and dispenses a predetermined amount of the calcium liquid into the reaction container 48a containing the mixed liquid. As a result, blood coagulation is started in the reaction container 48a. The gripping mechanism 33d is configured to transport the reaction container 48a in which the calcium liquid has been dispensed to the measurement device 34. Further, the gripping mechanism 33d is configured to transport the measured reaction container 48a from the measurement device 34 into a waste port 33j.

The measurement device 34 is configured to measure an absorbance or a transmittance of the measurement sample. The measurement device 34 includes a container set holder 34a in which the reaction container 48a containing the measurement sample is set, a light transmitter 34b configured to irradiate the reaction container 48a with light for signal detection, and a light receptor 34c configured to face the light transmitter 34b with the reaction container 48a interposed therebetween. The measurement device 34 includes the plurality of container set holders 34a. In this case, the measurement samples in the plurality of reaction containers 48a can be measured simultaneously.

The measurement device 34 measures a temporal change in the transmitted light in a process in which hemostatic components in the measurement sample in the reaction container 48a arranged in the container set holder 34a reacts. The light transmitter 34b irradiates the measurement sample in the reaction container 48a arranged in the container set holder 34a with light. The light transmitter 34b includes a light source such as a light emitting diode or a halogen lamp. The light receiver 34c receives light (transmitted light) emitted to the measurement sample in the reaction container 48a and transmitted through the measurement sample, and outputs an electric signal corresponding to an amount of received light. The light receiver 34c includes a photoelectric conversion element configured to convert the received light into an electric signal and output the electric signal, and transmits the electric signal in a digital form to the analysis device 36. Note that the measurement unit 34 may be configured to receive, by the light receiver 34c, light (scattered light) emitted from the light transmitter 34b that is scattered by the measurement sample.

The analysis device 36 is configured to analyze a coagulation time of the sample, an activity of a predetermined component, a concentration of a predetermined component, and the like based on a measurement result of the electrical signal output from the light receiver 34c, that is, optical information of the sample acquired by the measurement device 34. The analysis device 36, for example, is programmed to generate a reaction curve based on the intensity of the light transmitted through the measurement sample and calculates the coagulation time. An analysis result by the analysis device 36 is displayed on the display 37.

FIG. 10 is a diagram showing an upper portion of the blood coagulation analyzer 3 with the front cover 31a opened. As shown in FIG. 10, the first dispensers 42a and 42b each having the aspiration tube 43a,43b configured to aspirate a sample from the sample container 111, a cold storage 40 in which a reagent is set, and the like are disposed in the housing 31. The front cover 31a forms a front surface, a front portion of an upper surface, and a front portion of the left side surface of the housing 31, and is configured to rotate from bottom to top to open.

The front cover 31a is rotatably fixed to a rear portion of the upper surface of the housing 31 via a hinge. Further, a handle 31c is provided at a lower front surface of the front cover 31a. The handle 31c is an operation target used to open the front cover 31a. The handle 31c has a recess into which a finger of the operator can be inserted from below, and is disposed on a front surface of the front cover 31a. Therefore, the operator can easily open the front cover 31a from the front of the analysis system 1. The handle 31c is accessed from the second side (front side) of the second transport path 52 across the second transport path 52.

Inside the blood coagulation analyzer 3, the two aspiration tubes 43a,43b are disposed, and the aspiration tubes 43a,43b are visible with the front cover 31a opened. The aspiration tubes 43a,43b correspond to the maintenance management target for which maintenance, such as cleaning, is performed periodically or when an anomaly occurs in a measurement result. The operator can clean the aspiration tubes 43a,43b from the front of the analysis system 1. That is, the blood coagulation analyzer 3 and the transporter 4 are arranged in positions and orientations that allow access to the aspiration tubes 43a,43b from at least one position along one side (front side) of the second transport path 52. In other words, the blood coagulation analyzer 3 and the transporter 4 are arranged in positions and orientations that allow access to the aspiration tubes 43a,43b from the second side (front side) of the transporter 4. The at least one position along one side (front side) of the second transport path 52 may be a position in front of the aspiration tube 43a and a position in front of the aspiration tube 43b. The aspiration tubes 43a,43b are accessed from the second side (front side) of the second transport path 52 across the second transport path 52.

The cold storage 40 includes a reagent holding table 32a which is cooled to a temperature suitable for storing reagents and in which reagents and the like are set. As described above, the reagent containers 48b, 48c, 48d, and the like are set in the reagent holding table 32a. The cold storage 40 includes an opening 40a through which the container racks 47a and 47b can be taken in and out, and a cold storage cover 40b which opens and closes the opening 40a. The cold storage cover 40b is configured to rotate in the same direction as the front cover 31a to open the opening 40a.

The reagent holding table 32a in the cold storage 40 corresponds to the reagent set object on which reagents for the blood coagulation analyzer 3 are set and also corresponds to a quality control sample set object on which a quality control sample is set. The operator can set reagents and quality control samples on the reagent holding table 32a by opening the front cover 31a and the cold storage cover 40b from the front of the analysis system 1. That is, the blood coagulation analyzer 3 and the transporter 4 are arranged in positions and orientations that allow access to the reagent holding table 32a from at least one position along one side (front side) of the second transport path 52. In other words, the blood coagulation analyzer 3 and the transporter 4 are arranged in positions and orientations that allow access to the reagent holding table 32a from the second side (front side) of the transporter 4. The at least one position along one side (front side) of the second transport path 52 may be a position in front of the reagent holding table 32a. Further, it is preferable that the reagent holding table 32a and the two aspiration tubes 43a,43b are arranged within a horizontally distance of 700 mm from the front edge of the transporter 4 in the front-rear direction. In this case, workability is improved.

As described above, the blood coagulation analyzer 3 includes the sample set holder 49 disposed at a position adjoining the second transport path 52. For example, a sample container is set on the sample set holder 49 when a quality control sample or an urgent sample is measured, and measurement of the sample set on the sample set holder 49 is started by operating the measurement start button 39 disposed on the front surface of the blood coagulation analyzer 3. The sample set holder 49 is arranged in a direction facing the second transport path 52, and the operator can place the sample container on the sample set holder 49 from the front of the analysis system 1. That is, the blood coagulation analyzer 3 and the transporter 4 are arranged in positions and orientations that allow an access to the sample set holder 49 from at least one position along one side (front side) of the second transport path 52. In other words, the blood coagulation analyzer 3 and the transporter 4 are arranged in positions and orientations that allow access to the sample set holder 49 from the second side (front side) of the transporter 4. The at least one position along one side (front side) of the second transport path 52 may be a position in front of the sample set holder 49. The sample set holder 49 is accessed from the second side (front side) of the second transport path 52 across the second transport path 52.

The blood coagulation analyzer 3 includes an error handling object for which an error occurred in the analyzer is handled. An example of the error is an error in which a measurement result of the quality control sample is outside a control range as in the case of the blood cell analyzer 2. When the error occurs, for example, re-measurement of the quality control sample is performed, and a quality control sample having different lot number is set on the sample set holder 49. Therefore, the sample set holder 49 corresponds to the error handling object.

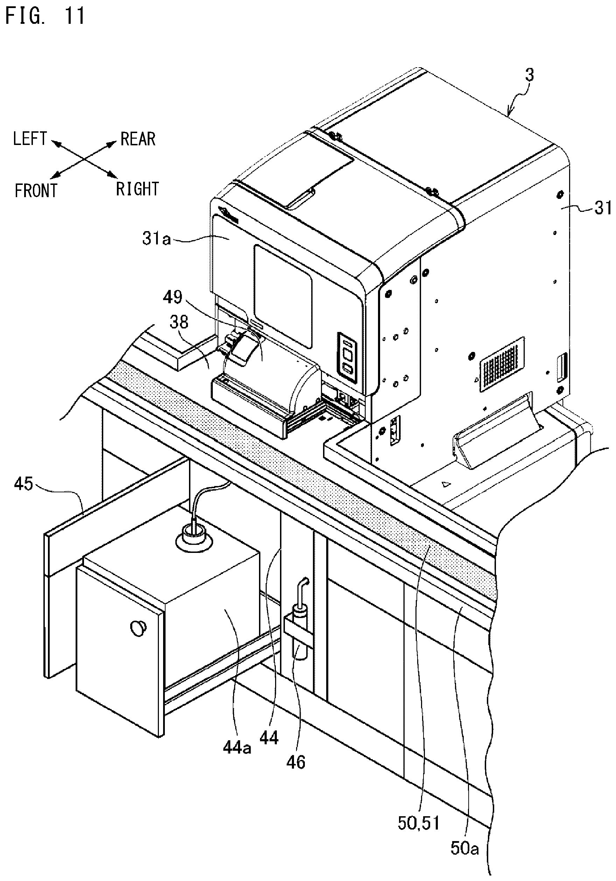

FIG. 11 is a diagram showing a lower portion of the blood coagulation analyzer 3 with a door 45 opened. As shown in FIG. 11, a cleaning liquid set holder 44 in which a cleaning liquid container 44a containing a cleaning liquid for cleaning the blood coagulation analyzer 3 is set is disposed at a lower portion of the blood coagulation analyzer 3. The cleaning liquid set holder 44 may have, for example, a space in which the cleaning liquid container 44a can be accommodated, and may include a drawer, a shelf, a carriage, or the like that accommodates the cleaning liquid container 44a in the space. The lower portion of the blood coagulation analyzer 3 includes the door 45 which forms the front face of the analyzer and closes the cleaning liquid set holder 44.

The cleaning liquid set holder 44 is arranged below the main body 30 and the transport path 50. The operator is capable of taking in and out the cleaning liquid container 44a by opening the door 45 from the front of the analysis system 1. That is, the blood coagulation analyzer 3 and the transporter 4 are arranged in positions and orientations that allow an access to the cleaning liquid set holder 44 from at least one position along one side (front side) of the second transport path 52. In other words, the blood coagulation analyzer 3 and the transporter 4 are arranged in positions and orientations that allow access to the cleaning liquid set holder 44 from the second side (front side) of the transporter 4. The at least one position along one side (front side) of the second transport path 52 may be a position in front of the cleaning liquid set holder 44. For example, a left end of the door 45 is fixed to a lower side surface of the housing 31 via a hinge so as to rotate from right to left to open the cover 45. The cleaning liquid set holder 44 is arranged on a first side (rear side) of the transporter 4 and is configured to be movable to a second side (front side) of the transporter 4. For example, the drawer, the carriage, and the like constituting the cleaning liquid set holder 44 can be pulled out toward the second side (front side) of the transporter 4, and the cleaning liquid container 44a can be taken in and out at the second side (front side).

The blood coagulation analyzer 3 includes a backflow prevention chamber 46. The backflow prevention chamber 46 corresponds to the maintenance target for which maintenance such as visual confirmation and cleaning is performed periodically or when an abnormality occurs in a measurement result. In the present embodiment, in the lower part of the blood coagulation analyzer 3, the backflow prevention chamber 46 is disposed inside the analyzer covered with the door 45. The backflow prevention chamber 46 can be seen by opening the door 45 and can be easily removed from the front of the analysis system 1. That is, the blood coagulation analyzer 3 and the transporter 4 are arranged in positions and orientations that allow an access to the backflow prevention chamber 46 from at least one position along one side (front side) of the second transport path 52. In other words, the blood coagulation analyzer 3 and the transporter 4 are arranged in positions and orientations that allow access to backflow prevention chamber 46 from the second side (front side) of the transporter 4. The at least one position along one side (front side) of the second transport path 52 may be a position in front of the backflow prevention chamber 46. Further, it is preferable that the backflow prevention chamber 46 be arranged within a horizontal distance of 700 mm from the front edge of the transporter 4 in the front-rear direction.

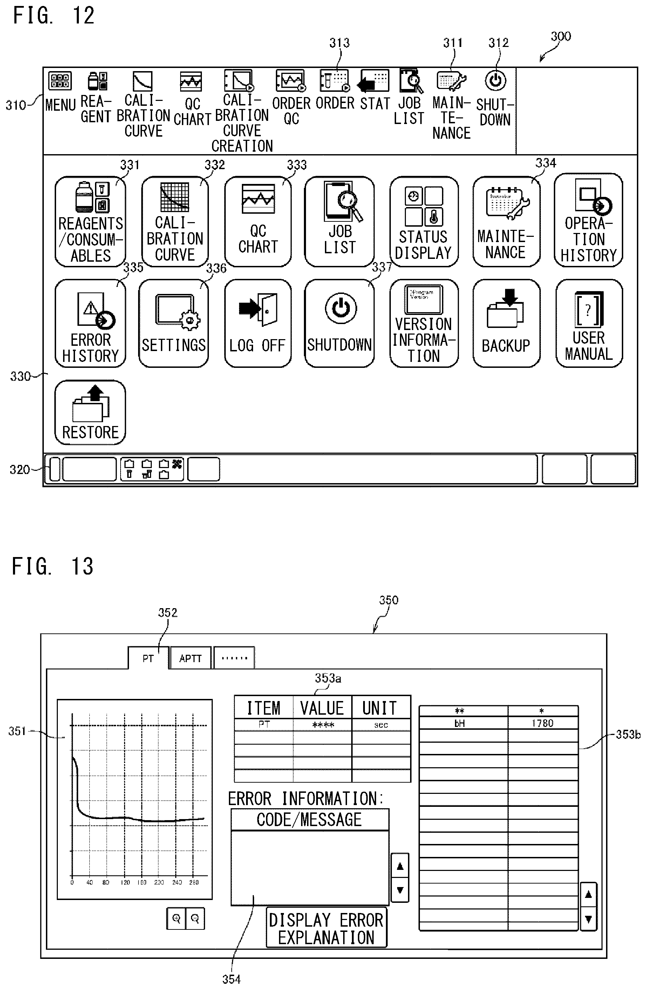

FIG. 12 is a diagram illustrating an exemplary operation screen of the blood coagulation analyzer 3. As shown in FIG. 12, the operation screen 300 includes a toolbar 310 including main function buttons, a status display area 320 including indicators indicating information such as a analyzer state, a host computer state, a remaining amount of a reagent, a remaining amount of a consumable, and the like, and a menu icon display area 330. The operation screen 300 is displayed on the display 37. On the display 37, in addition to the operation screen 300, an order screen on which sample information is inputted at the time of manual measurement, a result display screen to be described later, and the like are output.

The tool bar 310 includes a maintenance button 311 operated when maintenance and inspection of the apparatus is performed, a shutdown button 312 operated when the apparatus is shut down, an order button 313 to display the order screen, and the like. In the menu icon display area 330, a plurality of buttons (icons) for performing various operations and displaying various information may be displayed, and the same buttons as those included in the toolbar 310 may be displayed. The menu icon display area 330 includes a reagent consumable button 331, a calibration curve button 332, a QC chart button 333, a maintenance button 334, an error history button 335, a setting button 336, a shutdown button 337, and the like.

The shutdown button 312,337 displayed on the operating screen 300 corresponds to the shutdown instruction receiver configured to receive a shutdown instruction for the blood coagulation analyzer 3. Operation buttons other than the shutdown button 312,337 corresponds to the operation instruction receiver configured to receive an operation instruction for the blood coagulation analyzer 3. As described above, the screen of the display 37 is a touch panel screen configured to receive an operation instruction and display information, and is arranged in a direction facing the second transport path 52. Each button receives the operation instruction when a touch of the operator's finger is detected by the touch panel screen. That is, the screen of the display 37 is oriented in the front of the analysis system 1, and the blood coagulation analyzer 3 and the transporter 4 are arranged in positions and orientations that allow an access to the shutdown button 312,337 and the operation buttons from at least one position along one side (front side) of the transport path 50. In other words, the blood coagulation analyzer 3 and the transporter 4 are arranged in positions and orientations that allow access to the shutdown button 312,337 and the operation buttons from the second side (front side) of the transporter 4. The at least one position along one side (front side) of the transport path 50 may be a position in front of the display 37. The display 37 is accessed from the second side (front side) of the second transport path52 across the second transport path 52.

FIG. 13 is a diagram illustrating an exemplary result display screen of the blood coagulation analyzer 3. As illustrated in FIG. 13, the result display screen 350 includes a reaction curve display area 351 configured to display a reaction curve indicating a time-series change (profile) of intensities of transmitted light. The result display screen 350 is a screen configured to display details of a result of a measurement item selected by the measurement item tab 352. The result display screen 350 is displayed on the display 37. Note that a result display screen other than the result display screen 350 may be output to the display 37.

The result display screen 350 further includes a measurement result display area 353a, a detailed information display area 353b, and an error information display area 354. In the example illustrated in FIG. 13, the measurement item PT is selected, and measurement results related to the measurement item is displayed in the measurement result display area 353a and the detailed information display area 353b.

The result display 350 displayed on the display 37 corresponds to the analysis result screen displaying an analysis result of the blood coagulation analyzer 3. As described above, the display 37 is arranged to face the transport path 50, that is, to face the front of the analysis system 1. The blood coagulation analyzer 3 and the transporter 4 are arranged in positions and orientations that allow viewing of the analysis result displayed on the analysis result screen from at least one position along one side (front side) of the second transport path 52. In other words, the blood coagulation analyzer 3 and the transporter 4 are arranged in positions and orientations that allow viewing of the analysis result displayed on the analysis result screen from the second side (front side) of the transporter 4. The at least one position along one side (front side) of the second transport path 52 may be a position in front of the display 37.

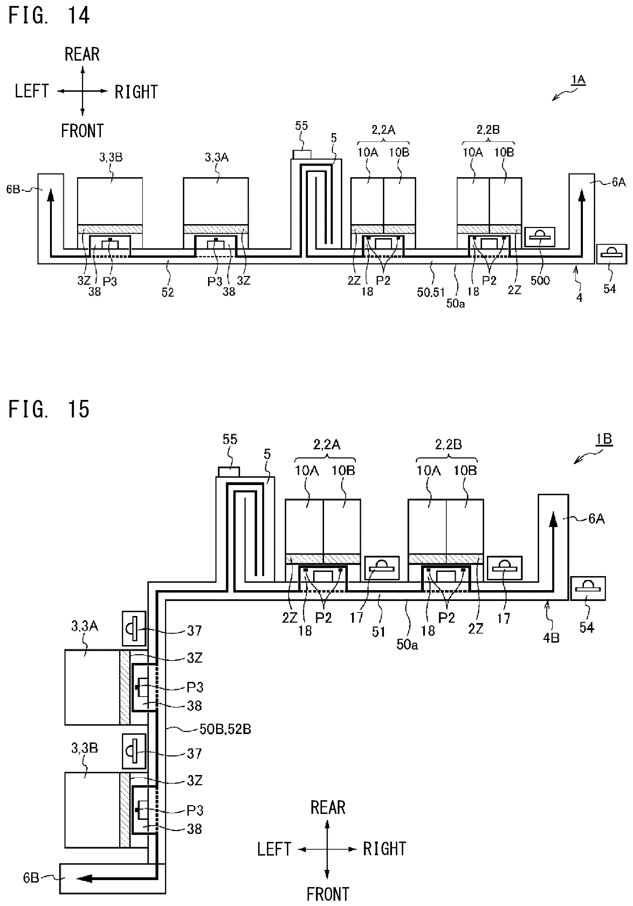

Hereinafter, another example (modification) of the embodiment will be described with reference to FIGS. 14 to 17. Hereinafter, the same components as those in the above-described embodiment will be denoted by the same reference numerals, and redundant description thereof will be omitted.

FIG. 14 is a diagram illustrating an analysis system 1A according to a first modification. As illustrated in FIG. 14, the analysis system 1A includes a common terminal device 500 that is used both for blood cell analyzer 2 and blood coagulation analyzer 3. The terminal device 500 is, for example, a touch panel type display. On the screen of the terminal device 500, an operation screen and an analysis result screen are displayed. The operation screen is a common operation instruction receiver configured to receive operation instructions for the blood cell analyzer 2 and operation instructions for the blood coagulation analyzer 3. The analysis result screen is a common analysis result screen displaying analysis results of the blood cell analyzer 2 and analysis results of the blood coagulation analyzer 3.

In the embodiment illustrated in FIG. 14, the terminal device 500 is arranged between the blood cell analyzer 2 and the rack collection part 6A, but the terminal device 500 may be arranged anywhere, such as between the rack installation part 5 and the blood cell analyzer 2, between the rack installation part 5 and the blood coagulation analyzer 3, between the blood coagulation analyzer 3 and the rack collection part 6B, and the like. However, it is preferable that the screen of the terminal device 500 be arranged to face the front of the analysis system 1A as in the analysis system 1. The terminal device 500 and the transporter 4 are arranged in positions and orientations that allow operation of the operation screen and viewing of the analysis result screen from at least one position along one side (front side) of the transport path 50. In other words, terminal device 500 and the transporter 4 are arranged in positions and orientations that allow operation of the operation screen and viewing of the analysis result screen from the second side (front side) of the transporter 4. The at least one position along one side (front side) of the transport path 50 may be a position in front of the terminal device 500.

At least one of a common startup instruction receiver configured to receive a startup of the blood cell analyzer 2 and a startup of the blood coagulation analyzer 3 and a common shutdown instruction receiver configured to receive a shutdown instruction of the blood cell analyzer 2 and a shutdown instruction of the blood coagulation analyzer 3 may be displayed on the terminal device 500. Further, the common startup instruction receiver may be a hardware switch such as a push-type button or a lever-type switch provided in an object other than the display of the terminal device 500. However, as with the analysis system 1, the startup instruction receiver is preferably arranged to face the front of the analysis system 1A.

FIG. 15 is a diagram illustrating an analysis system 1B according to a second modification. As shown in FIG. 15, the analysis system 1B includes a transporter 4B including a main transport path bent halfway. The first transport path 51 transporting the rack 100 from the rack installation part 5 to the blood cell analyzer 2 extends straight in the left-right direction, but the second transport path 52B transporting the rack 110 from the rack installation part 5 to the blood coagulation analyzer 3 is bent at a right angle in the middle. The transport path 50B, as a main transport path connecting the rack installation part 5 and the rack collection parts 6A, 6B, includes a first transport path 51 extending straight and a second transport path 52B bent halfway. In the analysis system 1B, the first transport path 51 and the second transport path 52B are arranged in directions crossing each other. Although the blood cell analyzer 2 and blood coagulation analyzer 3 are arranged in different orientations from each other, the operator can operate or work on the analyzers from at least one position along one side of the transport path 50B to avoid inefficient movement, such as moving around the perimeter of the system in a conventional manner. The at least one position along one side of the transport path 50B may be a position in front of the blood cell analyzer 2 and a position right side of the blood coagulation analyzer 3. Further, since the transport path 50B is bent halfway, the analysis system 1B can be arranged along two adjacent side walls in a clinical laboratory in which the analysis system 1B is installed.

In the embodiment shown in FIG. 15, the second transport path 52B is bent between the rack installation part 5 and the blood coagulation analyzer 3A, but the second transport path 52B may be bent between the blood coagulation analyzer 3A and the blood coagulation analyzer 3B or between the blood coagulation analyzer 3B and the rack collection part 6B. In either case, for example, the longitudinal direction of the rack 110 coincides with the transport direction from the rack installation part 5 to the bent portion in the second transport path 52B, and the longitudinal direction of the rack 110 is perpendicular to the transport direction from the bent portion to the rack collection part 6B. Note that a bent portion may be present in the first transport path 51 in addition to or in place of the bent portion in the second transport path 52B.

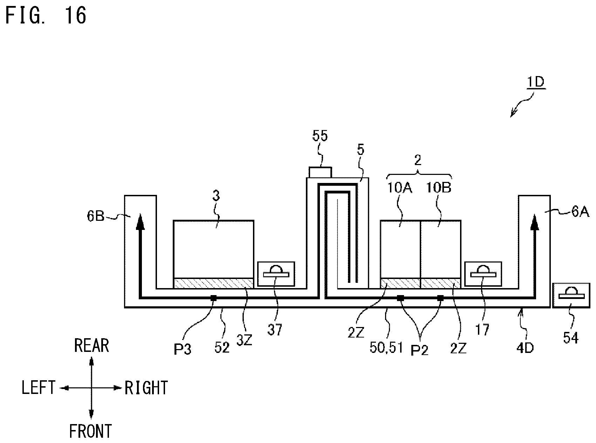

FIG. 16 is a diagram illustrating an analysis system 1C according to a third modification. As shown in FIG. 16, the analysis system 1C differs from the other embodiments in that it includes one blood cell analyzer 2 and one blood coagulation analyzer 3 each. Further, the transport units 18 and 38, which are sub transport path corresponding to the respective analyzers, are not provided on the transporter 4C of the analysis system 1C. When a number of the blood cell analyzer 2 is one, for example, it is not possible to shorten the measurement period by the transport unit 18, and the acquisition position P2 of the sample for the blood cell analyzer 2 is set on the first transport path 51 which is the main transport path. Similarly, when a number of the blood coagulation analyzer 3 is one, the sample acquiring position P3 of the sample for the blood coagulation analyzer 3 is set on the second transport path 52.

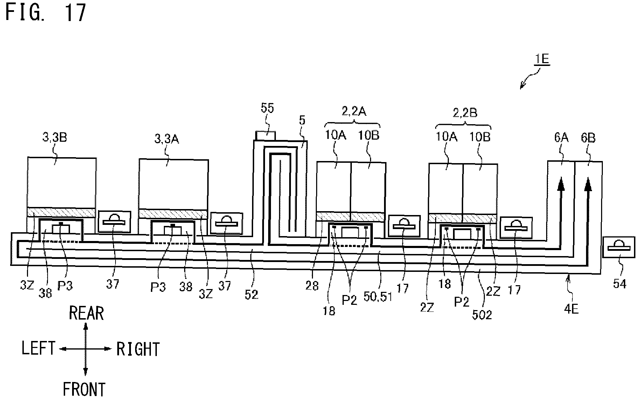

FIG. 17 is a diagram illustrating an analysis system 1D according to a fourth modification. As shown in FIG. 17, the analysis system 1D differs from the other embodiments in that the rack collection parts 6A,6B are arranged adjacently and includes a transporter 4D including a third transport path 502. In the embodiment illustrated in FIG. 17, the rack collection parts 6A,6B are arranged on the right side of the blood cell analyzer 2, and the third transport path 502 extends in parallel to the first transport path 51 and the second transport path 52.

As in the other embodiments described above, the first transport path 51 connects the rack installation part 5 and the rack collection part 6A and transports the rack 100 to the rack collection part 6A through the blood cell analyzer 2. On the other hand, the second transport path 52 is connected to the rack collection part 6B via the third transport path 502. In the analysis system 1E, the racks 110 transported to the blood coagulation analyzer 3 by the second transport path 52 are transported to the rack collection part 6B by the third transport path 502.

As described above, according to the analysis systems 1 to 1D, it is possible to perform operations on the respective analyzers from one side along the transport path. In other words, there is no need to operate the analyzers around the other side along the transport path. As a result, the travel distance of the operator can be greatly reduced, and the workload of the operator can be reduced. Further, since there is no need to secure a space that allows the operator to move to the other side along the transport path, an empty space to be secured around the analysis systems 1 to 1E can be reduced, and spaces in a clinical laboratory can be efficiently and effectively utilized.

Note that the above-described embodiment can be appropriately modified in design within a range that does not impair the object of the present invention. For example, in the above-described embodiment, since the blood cell analyzer 2 and the blood coagulation analyzer 3 are arranged on the left and right sides of the rack installation part 5, the rack 100 holding only the sample container 101 and the rack 110 holding only the sample container 111 need to be prepared. However, when, for example, the rack installation object, the blood cell analyzer, and the blood coagulation analyzer are arranged in this order along the main transport path, two types of sample containers 101,111 can be arranged in the same rack.

The present disclosure includes following items 1-39.
Item 1:
   An analysis system comprising:
   a blood cell analyzer configured to measure at least CBC items including white blood cell count, red blood cell count, hemoglobin amount, hematocrit value, mean corpuscular volume, mean corpuscular hemoglobin, mean corpuscular hemoglobin concentration, and platelet count;
   a blood coagulation analyzer; and
   a transporter configured to transport a sample to a first acquisition position on which the sample is acquired by the blood cell analyzer and a second acquisition position on which the sample is acquired by the blood coagulation analyzer, the transporter having a first side and a second side opposite to the first side, wherein
   the blood cell analyzer and the blood coagulation analyzer are arranged along the first side of the transporter, and
   the blood cell analyzer, the blood coagulation analyzer, and the transporter are arranged in positions and orientations that allow at least one of the following accesses from the second side of the transporter:
      (a) access to a power operation receiver configured to receive a power operation for the blood cell analyzer and a power operation for the blood coagulation analyzer,
      (b) access to a consumable set object on which a consumable used in the blood cell analyzer and a consumable used in the blood coagulation analyzer are set,
      (c) access to a terminal device configured to receive an operation instruction and/or display information for the blood cell analyzer and receive an operation instruction and/or display information for the blood coagulation analyzer,
      (d) access to a maintenance management target on which a first maintenance on the blood cell analyzer and a second maintenance on the blood coagulation analyzer are performed.
Item 2:
   The analysis system according to Item 1, wherein
   at least one of the power operation receiver, the consumable set object, the terminal device, and the maintenance management target is arranged along the first side of the transporter and accessed by crossing over the transporter from the second side of the transporter.
Item 3:
   The analysis system according to Item 2, wherein
   at least one of the power operation receiver, the consumable set object, the terminal device, and the maintenance management target accessed by crossing over the transporter from the second side of the transporter is arranged within a horizontal distance of 700mm from an edge of the transporter on the second side in the shortest distance.
Item 4:
   The analysis system according to any one of Items 1 to 3, wherein
   at least one of the power operation receiver, the consumable set object, the terminal device, and the maintenance management target is arranged along the first side of the transporter and moved to the second side of the transporter to be accessed.
Item 5:
   The analysis system according to any one of Items 1 to 4, wherein
   the transporter includes a main transport path configured to be straight without bending, and
   the blood cell analyzer and the blood coagulation analyzer are arranged in the same orientation each other.
Item 6:
   The analysis system according to any one of Items 1 to 5, wherein
   the transporter includes a main transport path configured to be bended, and
   the blood cell analyzer and the blood coagulation analyzer are arranged in different orientations each other.
Item 7:
   The analysis system according to any one of Items 1 to 6, wherein
   the blood cell analyzer includes a first aspiration tube configured to penetrate a first cap attached to a first sample container to aspirate the sample, and
   the blood coagulation analyzer includes a second aspiration tube configured to penetrate a second cap attached to a second sample container to aspirate the sample.
Item 8:
   The analysis system according to Item 7, wherein
   the blood coagulation analyzer includes a sample container fixer configured to fix the second sample container placed at the second acquisition position on the transporter during penetration of the second cap and aspiration of the sample by the second aspiration tube.
Item 9:
   The analysis system according to Item 7 or 8, wherein
   the maintenance management target includes the first aspiration tube and the second aspiration tube,
   the first maintenance includes cleaning the first aspiration tube,
   the second maintenance includes cleaning the second aspiration tube, and
   the blood cell analyzer, the blood coagulation analyzer, and the transporter are arranged in positions and orientations that allow access to the first aspiration tube from the second side of the transporter and access to the second aspiration tube from the second side of the transporter.
Item 10:
   The analysis system according to any one of Items 1 to 9, wherein
   the power operation receiver includes a startup instruction receiver configured to receive a startup instruction for the blood cell analyzer and a startup instruction for the blood coagulation analyzer, and
   the blood cell analyzer, the blood coagulation analyzer, and the transporter are arranged in positions and orientations that allow access to the startup instruction receiver from the second side of the transporter.
Item 11:
   The analysis system according to Item 10, wherein
   the startup instruction receiver includes a first startup instruction receiver configured to receive a first startup instruction for the blood cell analyzer and a second startup instruction receiver configured to receive a second startup instruction for the blood coagulation analyzer, and
   the blood cell analyzer, the blood coagulation analyzer, and the transporter are arranged in positions and orientations that allow access to the first startup instruction receiver from the second side of the transporter and access to the second startup instruction receiver from the second side of the transporter.
Item 12:
   The analysis system according to Item 11, wherein
   a first operation surface of the first startup instruction receiver on which the first startup instruction is performed and a second operation surface of the second startup instruction receiver on which the second startup instruction is performed are arranged to face the first side of the transporter.
Item 13:
   The analysis system according to Item 10, wherein
   the startup instruction receiver includes a common third startup instruction receiver configured to receive a startup instruction for both the blood cell analyzer and the blood coagulation analyzer, and
   the blood cell analyzer, the blood coagulation analyzer, and the transporter are arranged in positions and orientations that allow access to the third startup instruction receiver from the second side of the transporter.
Item 14:
   The analysis system according to any one of Items 1 to 13, wherein
   the power operation receiver includes a shutdown instruction receiver configured to receive a shutdown instruction for the blood cell analyzer and a shutdown instruction for the blood coagulation analyzer, and
   the blood cell analyzer, the blood coagulation analyzer, and the transporter are arranged in positions and orientations that allow access to the shutdown instruction receiver from the second side of the transporter.
Item 15:
   The analysis system according to Item 14, wherein
   the shutdown instruction receiver includes a first shutdown instruction receiver configured to receive a first shutdown instruction for the blood cell analyzer and a second shutdown instruction receiver configured to receive a second shutdown instruction for the blood coagulation analyzer, and
   the blood cell analyzer, the blood coagulation analyzer, and the transporter are arranged in positions and orientations that allow access to the first shutdown instruction receiver from the second side of the transporter and access to the second shutdown instruction receiver from the second side of the transporter.
Item 16:
   The analysis system according to Item 14, wherein
   the shutdown instruction receiver includes a common third shutdown instruction receiver configured to receive a shutdown instruction for both the blood cell analyzer and the blood coagulation analyzer, and
   the blood cell analyzer, the blood coagulation analyzer, and the transporter are arranged in positions and orientations that allow access to the third shutdown instruction receiver from the second side of the transporter.
Item 17:
   The analysis system according to any one of Items 1 to 16, wherein
   the consumable set object includes a quality control substance set object on which a quality control substance used in the blood cell analyzer and a quality control substance used in the blood coagulation analyzer are set, and
   the blood cell analyzer, the blood coagulation analyzer, and the transporter are arranged in positions and orientations that allow access to the quality control substance set object from the second side of the transporter.
Item 18:
   The analysis system according to Item 17, wherein
   the quality control substance includes a first quality control substance for quality control of the blood cell analyzer and a second quality control substance for quality control of the blood coagulation analyzer,
   the quality control substance set object includes a first quality control substance set object provided in the blood cell analyzer on which the first quality control substance is set and a second quality control substance set object provided in the blood coagulation analyzer on which the second quality control substance is set, and
   the blood cell analyzer, the blood coagulation analyzer, and the transporter are arranged in positions and orientations that allow access to the first quality control substance set object from the second side of the transporter and access to the second quality control substance set object from the second side of the transporter.
Item 19:
   The analysis system according to Item 17, wherein
   the quality control substance includes a first quality control substance for quality control of the blood cell analyzer and a second quality control substance for quality control of the blood coagulation analyzer,
   the quality control substance set object includes a common third quality control substance set object connected to the transporter on which the first quality control substance and the second quality control substance are set, and
   the transporter is configured to transport the first quality control substance set in the third quality control substance set object to the first acquisition position and transport the second quality control substance set in the third quality control substance set object to the second acquisition position.
Item 20:
   The analysis system according to any one of Items 1 to 19, wherein
   the consumable set object includes a reagent set object on which a reagent used in the blood cell analyzer and a reagent used in the blood coagulation analyzer are set, and
   the blood cell analyzer, the blood coagulation analyzer, and the transporter are arranged in positions and orientations that allow access to the reagent set object from the second side of the transporter.
Item 21:
   The analysis system according to Item 20, wherein
   the reagent includes a first reagent for measurement by the blood cell analyzer and a second reagent for measurement by the blood coagulation analyzer,
   the reagent set object includes a first reagent set object on which the first reagent is set and a second reagent set object on which the second reagent is set, and
   the blood cell analyzer, the blood coagulation analyzer, and the transporter are arranged in positions and orientations that allow access to the first reagent set object from the second side of the transporter and access to the second reagent set object from the second side of the transporter.
Item 22:
   The analysis system according to Item 21, wherein
   the blood cell analyzer includes an openable first cover,
   the blood coagulation analyzer includes an openable second cover,
   the first reagent set object is arranged within the first cover of the blood cell analyzer,
   the second reagent set object is arranged within the second cover of the blood coagulation analyzer, and
   the blood cell analyzer, the blood coagulation analyzer, and the transporter are arranged in positions and orientations that allow access to the first cover from the second side of the transporter and access to the second cover from the second side of the transporter.
Item 23:
   The analysis system according to any one of Items 1 to 22, wherein
   the consumable set object includes a cleaning liquid set object on which a cleaning liquid used to clean the blood cell analyzer and a cleaning liquid used to clean the blood coagulation analyzer are set, and
   the blood cell analyzer, the blood coagulation analyzer, and the transporter are arranged in positions and orientations that allow access to the cleaning liquid set object from the second side of the transporter.
Item 24:
   The analysis system according to Item 23, wherein
   the cleaning liquid includes a first cleaning liquid used to clean the blood cell analyzer and a second cleaning liquid used to clean the blood coagulation analyzer,
   the cleaning liquid set object includes a first cleaning liquid set object on which the first cleaning liquid is set and a second cleaning liquid set object on which the second cleaning liquid is set, and
   the blood cell analyzer, the blood coagulation analyzer, and the transporter are arranged in positions and orientations that allow access to the first cleaning liquid set object from the second side of the transporter and access to the second cleaning liquid set object from the second side of the transporter.
Item 25:
   The analysis system according to Item 24, wherein
   the first cleaning liquid set object is arranged at a lower part of the blood cell analyzer, and the second cleaning liquid set object is arranged at a lower part of the blood coagulation analyzer.
Item 26:
   The analysis system according to any one of Items 1 to 25, wherein
   the terminal device includes an operation instruction receiver configured to receive an operation instruction for the blood cell analyzer and an operation instruction for the blood coagulation analyzer, and
   the blood cell analyzer, the blood coagulation analyzer, and the transporter are arranged in positions and orientations that allow access to the operation instruction receiver from the second side of the transporter.
Item 27:
   The analysis system according to Item 26, wherein
   the operation instruction receiver includes a first operation instruction receiver configured to receive an operation instruction for the blood cell analyzer and a second operation instruction receiver configured to receive an operation instruction for the blood coagulation analyzer, and
   the blood cell analyzer, the blood coagulation analyzer, and the transporter are arranged in positions and orientations that allow access to the first operation instruction receiver from the second side of the transporter and access to the second operation instruction receiver from the second side of the transporter.
Item 28:
   The analysis system according to Item 27, wherein
   the first operation instruction receiver and the second operation instruction receiver are touch panel screens configured to receive the operation instructions and display information.
Item 29:
   The analysis system according to Item 26, wherein
   the operation instruction receiver includes a common third operation instruction receiver configured to receive operation instructions for both the blood cell analyzer and the blood coagulation analyzer, and
   the blood cell analyzer, the blood coagulation analyzer, and the transporter are arranged in positions and orientations that allow access to the third operation instruction receiver from the second side of the transporter.
Item 30:
   The analysis system according to any one of Items 1 to 29, wherein
   the terminal device includes an analysis result display configured to display an analysis result of the blood cell analyzer and an analysis result of the blood coagulation analyzer, and
   the blood cell analyzer, the blood coagulation analyzer, and the transporter are arranged in positions and orientations that allow viewing of the analysis results displayed on the analysis result display from the second side of the transporter.
Item 31:
   The analysis system according to Item 30, wherein
   the analysis result display includes a first analysis result display configured to display a first analysis result of the blood cell analyzer and a second analysis result display configured to display a second analysis result of the blood coagulation analyzer, and
   the blood cell analyzer, the blood coagulation analyzer, and the transporter are arranged in positions and orientations that allow viewing of the first analysis result displayed on the first analysis result display from the second side of the transporter and viewing of the second analysis result displayed on the second analysis result display from the second side of the transporter.
Item 32:
   The analysis system according to Item 30, wherein
   the analysis result display includes a common third analysis result display configured to display both a first analysis result of the blood cell analyzer and a second analysis result of the blood coagulation analyzer, and
   the blood cell analyzer, the blood coagulation analyzer, and the transporter are arranged in positions and orientations that allow viewing of the first and second analysis results displayed on the third analysis result display from the second side of the transporter.
Item 33:
   The analysis system according to any one of Items 1 to 32, wherein
   the maintenance management target includes an error handling object on which a first error occurred in the blood cell analyzer is handled and a second error occurred in the blood coagulation analyzer is handled, and
   the blood cell analyzer, the blood coagulation analyzer, and the transporter are arranged in positions and orientations that allow access to the error handling object from the second side of the transporter.
Item 34:
   The analysis system according to Item 33, wherein
   the consumable set object includes a quality control substance set object on which a first quality control substance used in the blood cell analyzer is set and a second quality control substance used in the blood coagulation analyzer is set,
   the first error is an error where a measurement result of the first quality control substance is outside a first management range,
   the second error is an error where a measurement result of the second quality control substance is outside a second management range, and
   the error handling object is the quality control substance set object.
Item 35:
   The analysis system according to any one of Items 1 to 34, wherein
   the maintenance management target includes a maintenance target on which a maintenance on the blood cell analyzer is performed and a maintenance on the blood coagulation analyzer is performed, and
   the blood cell analyzer, the blood coagulation analyzer, and the transporter are arranged in positions and orientations that allow access to the maintenance target from the second side of the transporter.
Item 36:
   The analysis system according to Item 35, wherein
   the blood cell analyzer includes a first backflow preventor configured to prevent backflow of liquid,
   the blood coagulation analyzer includes a second backflow preventor configured to prevent backflow of liquid, and
   the blood cell analyzer, the blood coagulation analyzer, and the transporter are arranged in positions and orientations that allow visual confirmation of the first backflow preventor, which is the maintenance target, from the second side of the transporter and visual confirmation of the second backflow preventor, which is the maintenance target, from the second side of the transporter.
Item 37:
   The analysis system according to any one of Items 1 to 36, wherein
   the transporter includes a main transport path, a first sub-transport path configured to transport the sample transported by the main transport path to the first acquisition position and return the sample to the main transport path, and a second sub-transport path configured to transport the sample transported by the main transport path to the second acquisition position and return the sample to the main transport path.
Item 38:
   The analysis system according to any one of Items 1 to 37, wherein
   the sample is contained in a first sample container transported to the first acquisition position and a second sample container transported to the second acquisition position, and
   the transporter includes
      a code reader configured to read a first identification code attached to the first sample container and a second identification code attached to the second sample container to individually identify the first sample container and the second sample container, and
      a transport controller configured to determine a transport destination of the first sample container and a transport destination of the second sample container based on the first and second identification codes read by the code reader.
Item 39:
   The analysis system according to any one of Items 1 to 38, further comprising
   a sample installation unit on which the sample is placed, wherein the sample installation unit is integrated in the transporter between the blood cell analyzer and the blood coagulation analyzer.

## Claims

1. An analysis system comprising:
a blood cell analyzer configured to measure at least CBC items including white blood cell count, red blood cell count, hemoglobin amount, hematocrit value, mean corpuscular volume, mean corpuscular hemoglobin, mean corpuscular hemoglobin concentration, and platelet count;
a blood coagulation analyzer; and
a transporter configured to transport a sample to a first acquisition position on which the sample is acquired by the blood cell analyzer and a second acquisition position on which the sample is acquired by the blood coagulation analyzer, the transporter having a first side and a second side opposite to the first side, wherein
the blood cell analyzer and the blood coagulation analyzer are arranged along the first side of the transporter, and
the blood cell analyzer, the blood coagulation analyzer, and the transporter are arranged in positions and orientations that allow at least one of the following accesses from the second side of the transporter:
(b) access to a power operation receiver configured to receive a power operation for the blood cell analyzer and a power operation for the blood coagulation analyzer,
(b) access to a consumable set object on which a consumable used in the blood cell analyzer and a consumable used in the blood coagulation analyzer are set,
(c) access to a terminal device configured to receive an operation instruction and/or display information for the blood cell analyzer and receive an operation instruction and/or display information for the blood coagulation analyzer,
(d) access to a maintenance management target on which a first maintenance on the blood cell analyzer and a second maintenance on the blood coagulation analyzer are performed.

2. The analysis system according to claim 1, wherein
at least one of the power operation receiver, the consumable set object, the terminal device, and the maintenance management target is arranged along the first side of the transporter and accessed by crossing over the transporter from the second side of the transporter.

3. The analysis system according to claim 2, wherein
at least one of the power operation receiver, the consumable set object, the terminal device, and the maintenance management target accessed by crossing over the transporter from the second side of the transporter is arranged within a horizontal distance of 700mm from an edge of the transporter on the second side in the shortest distance.

4. The analysis system according to any one of claims 1 to 3, wherein
at least one of the power operation receiver, the consumable set object, the terminal device, and the maintenance management target is arranged along the first side of the transporter and moved to the second side of the transporter to be accessed.

5. The analysis system according to any one of claims 1 to 4, wherein
the transporter includes a main transport path configured to be straight without bending, and
the blood cell analyzer and the blood coagulation analyzer are arranged in the same orientation each other.

6. The analysis system according to any one of claims 1 to 5, wherein
the blood cell analyzer includes a first aspiration tube configured to penetrate a first cap attached to a first sample container to aspirate the sample, and
the blood coagulation analyzer includes a second aspiration tube configured to penetrate a second cap attached to a second sample container to aspirate the sample.

7. The analysis system according to any one of claims 1 to 6, wherein
the power operation receiver includes a startup instruction receiver configured to receive a startup instruction for the blood cell analyzer and a startup instruction for the blood coagulation analyzer, and
the blood cell analyzer, the blood coagulation analyzer, and the transporter are arranged in positions and orientations that allow access to the startup instruction receiver from the second side of the transporter.

8. The analysis system according to any one of claims 1 to 7, wherein
the power operation receiver includes a shutdown instruction receiver configured to receive a shutdown instruction for the blood cell analyzer and a shutdown instruction for the blood coagulation analyzer, and
the blood cell analyzer, the blood coagulation analyzer, and the transporter are arranged in positions and orientations that allow access to the shutdown instruction receiver from the second side of the transporter.

9. The analysis system according to any one of claims 1 to 8, wherein
the consumable set object includes a quality control substance set object on which a quality control substance used in the blood cell analyzer and a quality control substance used in the blood coagulation analyzer are set, and
the blood cell analyzer, the blood coagulation analyzer, and the transporter are arranged in positions and orientations that allow access to the quality control substance set object from the second side of the transporter.

10. The analysis system according to any one of claims 1 to 9, wherein
the consumable set object includes a reagent set object on which a reagent used in the blood cell analyzer and a reagent used in the blood coagulation analyzer are set, and
the blood cell analyzer, the blood coagulation analyzer, and the transporter are arranged in positions and orientations that allow access to the reagent set object from the second side of the transporter.

11. The analysis system according to any one of claims 1 to 10, wherein
the consumable set object includes a cleaning liquid set object on which a cleaning liquid used to clean the blood cell analyzer and a cleaning liquid used to clean the blood coagulation analyzer are set, and
the blood cell analyzer, the blood coagulation analyzer, and the transporter are arranged in positions and orientations that allow access to the cleaning liquid set object from the second side of the transporter.

12. The analysis system according to any one of claims 1 to 11, wherein
the terminal device includes an operation instruction receiver configured to receive an operation instruction for the blood cell analyzer and an operation instruction for the blood coagulation analyzer, and
the blood cell analyzer, the blood coagulation analyzer, and the transporter are arranged in positions and orientations that allow access to the operation instruction receiver from the second side of the transporter.

13. The analysis system according to any one of claims 1 to 12, wherein
the maintenance management target includes a maintenance target on which a maintenance on the blood cell analyzer is performed and a maintenance on the blood coagulation analyzer is performed, and
the blood cell analyzer, the blood coagulation analyzer, and the transporter are arranged in positions and orientations that allow access to the maintenance target from the second side of the transporter.

14. The analysis system according to any one of claims 1 to 13, wherein
the transporter includes a main transport path, a first sub-transport path configured to transport the sample transported by the main transport path to the first acquisition position and return the sample to the main transport path, and a second sub-transport path configured to transport the sample transported by the main transport path to the second acquisition position and return the sample to the main transport path.

15. The analysis system according to any one of claims 1 to 14, further comprising
a sample installation unit on which the sample is placed, wherein the sample installation unit is integrated in the transporter between the blood cell analyzer and the blood coagulation analyzer.
